(19) Europäisches Patentamt / European Patent Office / Office européen des brevets

(11) **EP 4 286 126 B1**

(12) **EUROPEAN PATENT SPECIFICATION**

(45) Date of publication and mention of the grant of the patent:
**17.09.2025 Bulletin 2025/38**

(21) Application number: **22745848.6**

(22) Date of filing: **25.01.2022**

(51) International Patent Classification (IPC):
*C08J 9/18* (2006.01)   *C08J 9/232* (2006.01)
*B29C 48/04* (2019.01)   *B29B 9/06* (2006.01)
*B29K 23/00* (2006.01)   *B29K 105/04* (2006.01)
*C08F 255/02* (2006.01)   *B29C 67/20* (2006.01)
*B29B 7/48* (2006.01)   *B29B 7/72* (2006.01)
*B29C 48/00* (2019.01)   *B29C 48/285* (2019.01)
*B29C 48/385* (2019.01)   *B29C 48/425* (2019.01)

(52) Cooperative Patent Classification (CPC):
(C-Sets available)
B29B 9/12; B29B 7/48; B29B 7/7485; B29B 7/88;
B29C 44/3461; B29C 48/0012; B29C 48/022;
B29C 48/04; B29C 48/288; B29C 48/297;
B29C 48/385; B29C 48/425; C08F 255/02;
C08J 9/122; C08J 9/16;                    (Cont.)

(86) International application number:
**PCT/JP2022/002599**

(87) International publication number:
**WO 2022/163627 (04.08.2022 Gazette 2022/31)**

(54) **METHOD FOR PRODUCING POLYPROPYLENE-BASED RESIN HAVING BRANCHED STRUCTURE, METHOD FOR PRODUCING EXTRUSION-FOAMED PARTICLES, AND METHOD FOR PRODUCING FOAMED MOLDED ARTICLE**

VERFAHREN ZUR HERSTELLUNG VON POLYPROPYLENBASIERTEM HARZ MIT VERZWEIGTER STRUKTUR, VERFAHREN ZUR HERSTELLUNG VON EXTRUSIONSGESCHÄUMTEN PARTIKELN UND VERFAHREN ZUR HERSTELLUNG EINES GESCHÄUMTEN FORMARTIKELS

PROCÉDÉ DE FABRICATION D'UNE RÉSINE À BASE DE POLYPROPYLÈNE AYANT UNE STRUCTURE RAMIFIÉE, PROCÉDÉ DE FABRICATION DE PARTICULES EXPANSÉES PAR EXTRUSION ET PROCÉDÉ DE FABRICATION D'UN ARTICLE MOULÉ EN MOUSSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.01.2021   JP 2021010658**
**26.01.2021   JP 2021010659**

(43) Date of publication of application:
**06.12.2023   Bulletin 2023/49**

(73) Proprietor: **Kaneka Corporation**
**Osaka-shi, Osaka 530-8288 (JP)**

(72) Inventor: **SHIMODA, Mitsutaka**
**Settsu-shi, Osaka 566-0072 (JP)**

(74) Representative: **Vossius & Partner**
**Patentanwälte Rechtsanwälte mbB**
**Siebertstraße 3**
**81675 München (DE)**

(56) References cited:
WO-A1-2011/046103      WO-A1-2018/016399
JP-A- 2001 179 795      JP-A- 2002 012 717
JP-A- 2002 012 717      JP-A- 2002 080 526
JP-A- 2003 276 021      JP-A- 2006 312 315
JP-A- 2009 256 460      JP-A- 2017 066 204
JP-A- 2019 172 828      JP-A- H04 202 444

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

JP-A- H09 111 034  JP-A- H09 249 763
KR-A- 20100 073 745 US-A1- 2018 001 533
US-A1- 2018 334 559

C-Sets
**C08F 255/02, C08F 236/04;
C08L 51/06, C08L 23/12**

(52) Cooperative Patent Classification (CPC): (Cont.)
**C08J 9/232; C08L 51/06;** B29B 9/065;
B29C 48/0022; B29K 2023/12; B29K 2105/04;
C08J 2201/03; C08J 2323/14; C08J 2351/06

**Description**

Technical Field

The present invention relates to a method for producing a branched-structured polypropylene-based resin, a method for producing extruded expanded particles, and a method for producing a foamed molded product.

Background Art

Polypropylene-based resin in-mold foamed molded products obtained with use of polypropylene-based resin expanded particles have the characteristics of, for example, being excellent in capability of being formed in any shape, shock-absorbing properties, lightweight properties, and heat insulating properties, which are advantages of in-mold foamed molded products.

A method for producing polypropylene-based resin expanded particles includes a batch foaming method which is a discontinuous process, an extrusion expansion method which is a continuous process, and the like. The extrusion expansion method has many advantages in terms of efficiency and environment, but has a problem that it is difficult to obtain polypropylene-based resin expanded particles having good moldability.

As a means for solving this problem, it has been considered to use, as a raw material, a modified polypropylene resin having an improved melt tension.

For example, Patent Literature 1 discloses a method for producing a modified polypropylene resin composition having an improved melt tension by adding a particular thiuram sulfide-based compound to a polypropylene-based resin.

As a technique for obtaining polypropylene-based resin expanded particles by an extrusion expansion method, a technique disclosed in Patent Literature 2 is known. Patent Literature 2 discloses a method for producing polypropylene-based resin expanded particles by melting and kneading a polypropylene-based resin and a blowing agent with use of an extruder, and then cooling the obtained melted resin, extruding the resin to a low-pressure region, and chopping the resin.

Citation List

[Patent Literature]

[Patent Literature 1]
Japanese Patent Application Publication Tokukai No. 2011-153170
[Patent Literature 2]
International Publication No. 2018/016399

Further related prior art may be found in KR 2010 0073745 A, JP H09 111034 A, JP 2002 012717 A and US 2018/334559 A1.

Summary of Invention

Technical Problem

However, the conventional technique related to the modified polypropylene resin composition as in Patent Literature 1 is not sufficient in terms of melt tension, and there is room for further improvement.

An embodiment of the present invention is accomplished in view of the above problems, and an object thereof is to provide a branched polypropylene-based resin having a high melt tension, and a method for producing the same.

Solution to Problem

The inventors of the present invention have carried out diligent study in order to attain the object. As a result, the inventors of the present invention have uniquely obtained findings below, and completed the present invention: by melting and kneading a resin mixture containing a polypropylene-based resin, a conjugated diene compound, and a radical polymerization initiator at a particular weight ratio while introducing thereto specific energy of not less than a predetermined value, it is surprisingly possible to obtain a novel branched polypropylene-based resin having a high melt tension.

That is, a polypropylene-based resin production method in accordance with an embodiment of the present invention is a method for producing a branched-structured polypropylene-based resin, the method being carried out using a first production device including a die and a first melting and kneading section which has a screw, the method including: a first melting and kneading step of melting and kneading a polypropylene-based resin, a conjugated diene compound, and a radical polymerization initiator in the first melting and kneading section; and a discharging step of discharging, through the die, a branched-structured polypropylene-based resin obtained in the first melting and kneading step, an amount of the conjugated diene compound used being 0.30 parts by weight to 1.50 parts by weight, with respect to 100 parts by weight of the polypropylene-based resin, an amount of the radical polymerization initiator used being 0.50 parts by weight to 2.00 parts by weight, with respect to 100 parts by weight of the polypropylene-based resin, and specific energy $E_1$ being not less than 0.35 kWh/kg, where the specific energy $E_1$ is a value obtained by dividing electric power $P_1$ that is necessary for driving the screw of the first melting and kneading section by a discharge rate $Q_1$ of the branched-structured polypropylene-based resin.

A polypropylene-based resin extruded expanded particles production method in accordance with another embodiment of the present invention is carried out using a third production device including a second melting and kneading section that has a plurality of screws and a granulation section that has a die, the method including: a second melting and kneading step of melting and kneading, in the second melting and kneading section, a blowing agent and a branched-structured polypropylene-based resin; and an extrusion expansion step of discharging, through the die, a composition obtained in the second melting and kneading step to a region having a pressure lower than an internal pressure of the third production device, specific energy $E_2$ being not more than 0.190 kWh/kg, where the specific energy $E_2$ is a value obtained by dividing electric power $P_2$ that is necessary for driving the plurality of screws of the second melting and kneading section by a discharge rate $Q_2$ of the composition.

Advantageous Effects of Invention

According to an embodiment of the present invention, it is possible to provide a method for producing a branched-structured polypropylene-based resin and having a high melt tension.

Description of Embodiments

The following description will discuss embodiments of the present invention. The present invention is not limited to arrangements described below, but may be altered in various ways by a skilled person within the scope of the claims. Any embodiment or example derived from a proper combination of technical means disclosed in different embodiments or examples is also encompassed in the technical scope of the present invention. Furthermore, a new technical feature can be formed by a combination of technical means disclosed in different embodiments. All academic and patent literatures cited herein are incorporated herein by reference. Any numerical range expressed as "A to B" herein means "not less than A and not more than B (i.e., a range from A to B which includes both A and B)" unless otherwise stated.

In this specification, the "branched-structured polypropylene-based resin" is intended to mean (a) a polypropylene-based resin in which molecules of a polypropylene-based resin in which a branched structure is not introduced are partially intermolecularly crosslinked with each other and (b) a polypropylene-based resin in which, as a branched chain, a diene compound or the like other than (poly)propylene is introduced in a polypropylene-based resin in which a branched structure is not introduced. In this specification, the "polypropylene-based resin in which a branched structure is not introduced" may be referred to as a "linear polypropylene-based resin", the "branched-structured polypropylene-based resin" may be referred to as a "branched polypropylene-based resin", and the "linear polypropylene-based resin" and the "branched polypropylene-based resin" may be collectively referred to as a "polypropylene-based resin". The linear polypropylene-based resin can be considered as a raw material for a branched polypropylene-based resin.

In this specification, the linear polypropylene-based resin is intended to mean a resin which contains structural units derived from a propylene monomer in a proportion of not less than 50 mol% with respect to 100 mol% of all structural units contained in the resin. In this specification, the "structural units derived from a propylene monomer" may be referred to as "propylene units".

In this specification, a branched polypropylene-based resin is intended to mean a resin which contains structural units derived from a propylene monomer in a proportion of not less than 50 mol% with respect to 100 mol% of all structural units contained in a main chain of the branched polypropylene-based resin. Note that the "main chain" of the branched polypropylene-based resin is intended to mean a structure derived from a linear polypropylene-based resin which is a raw material for the branched polypropylene-based resin.

<Embodiment 1>

[1-1. Technical idea of Embodiment 1]

As a result of conducting diligent studies, the inventors of the present invention have newly obtained findings as below.

It is considered that one of solutions to production of polypropylene-based resin expanded particles having good moldability by an extrusion expansion method is to improve a melt tension of a polypropylene-based resin that is used as a raw material.

The technique of Patent Literature 1 aims to improve a melt tension by introducing a special raw material which is a thiuram sulfide-based compound into a polypropylene-based resin. However, the technique of Patent Literature 1 poses a problem such as an increase in cost due to the use of the special raw material. Moreover, there is room for further improvement in terms of melt tension of the modified polypropylene resin prepared by the technique of Patent Literature 1.

In contrast, the inventors of the present invention have first attempted to improve a melt tension of an obtained branched polypropylene-based resin by using a polypropylene-based resin, a conjugated diene compound, and a radical polymerization initiator as raw materials, and increasing an amount of the radical polymerization initiator used, relative to the polypropylene-based resin, to increase branch points of the polypropylene-based resin. However, a mere increase in the amount of the radical polymerization initiator used could not achieve an improvement in melt tension to an intended level.

Under the circumstances, the inventors of the present invention have further carried out diligent studies, and consequently have uniquely obtained findings below, and completed Embodiment 1 of the present invention: a melt tension of an obtained branched polypropylene-based resin is greatly improved by appropriately adjusting (i) a weight ratio of components in a resin mixture (first resin mixture described later) containing a polypropylene-based resin, a conjugated diene compound, and a radical polymerization initiator, and (ii) specific energy introduced to the resin mixture during melting and kneading.

Furthermore, the inventors of the present invention have investigated the cause that the melt tension of the branched polypropylene-based resin was improved by the adjustment of the specific energy introduced to the resin mixture during melting and kneading, and consequently uniquely obtained the following findings: (i) in a case where a resin mixture in which an amount of a radical polymerization initiator used has been increased is melted and kneaded while introducing specific energy lower than a predetermined value, a gel fraction of the obtained branched polypropylene-based resin is increased; and (ii) in a case where specific energy introduced in melting and kneading of the resin mixture is not less than a predetermined value, a gel fraction of the obtained branched polypropylene-based resin sharply decreases.

[1-2. Method for producing branched-structured polypropylene-based resin]

A method for producing a branched-structured polypropylene-based resin in accordance with Embodiment 1 of the present invention is carried out using a first production device including a die and a first melting and kneading section which has a screw, the method including: a first melting and kneading step of melting and kneading a polypropylene-based resin, a conjugated diene compound, and a radical polymerization initiator in the first melting and kneading section; and a discharging step of discharging, through the die, a branched-structured polypropylene-based resin obtained in the first melting and kneading step, an amount of the conjugated diene compound used being 0.30 parts by weight to 1.50 parts by weight, with respect to 100 parts by weight of the polypropylene-based resin, an amount of the radical polymerization initiator used being 0.50 parts by weight to 2.00 parts by weight, with respect to 100 parts by weight of the polypropylene-based resin, and specific energy $E_1$ being not less than 0.35 kWh/kg.

Note that, in this specification, the "specific energy $E_1$" is a value obtained by dividing electric power $P_1$ that is necessary for driving the screw of the first melting and kneading section by a discharge rate $Q_1$ of the branched-structured polypropylene-based resin.

In this specification, a "method for producing a branched-structured polypropylene-based resin in accordance with Embodiment 1 of the present invention" may be referred to as a "first production method".

According to the first production method, it is possible to obtain a branched polypropylene-based resin having a high melt tension. The branched polypropylene-based resin obtained by the first production method consequently has a low gel fraction. That is, the first production method can provide a branched polypropylene-based resin having a melt tension of not less than 8.0 cN at 200°C and a gel fraction of not more than 10.0% by weight. The gel fraction will be described later in more detail. Moreover, the branched polypropylene-based resin obtained by the first production method has the advantage that it is possible to provide polypropylene-based resin extruded expanded particles having excellent moldability.

First, raw materials (components) used in the first production method will be described, and then each step of the first production method will be described.

(First resin mixture)

In the first production method, a mixture that contains at least a polypropylene-based resin, a conjugated diene compound, and a radical polymerization initiator in the above-described particular amounts is referred to as a first resin mixture.

(Polypropylene-based resin)

The polypropylene-based resin used in the first production method may be (a) a polypropylene-based resin that does not have a branched structure (i.e., a linear polypropylene-based resin) or (b) a mixture of a branched polypropylene-based resin and a polypropylene-based resin that does not have a branched structure. The branched polypropylene-based resin used in the mixture (b) with the polypropylene-based resin that does not have a branched structure may be (i) a branched polypropylene-based resin obtained by the first production method, (ii) a graft copolymer of propylene and a monomer other than propylene, (iii) a branched polypropylene-based resin obtained by introducing a branched structure into a polypropylene-based resin that does not have a branched structure by a method in which the polypropylene-based resin that does not have a branched structure is irradiated with radial rays, or (iv) a mixture of these.

The linear polypropylene-based resin in the polypropylene-based resin used in the first production method may be (a) a homopolymer of propylene, (b) a block copolymer, an alternating copolymer, a random copolymer, or a graft copolymer of propylene and a monomer other than propylene, or (c) a mixture of these. A main chain of the branched polypropylene-based resin in the polypropylene-based resin used in the first production method may be (a) a homopolymer of propylene, (b) a block copolymer, an alternating copolymer, a random copolymer, or a graft copolymer of propylene and a monomer other than propylene, or (c) a mixture of these.

In addition to the propylene units, the polypropylene-based resin may have one or more units of structural units derived from a monomer(s) other than a propylene monomer or may have one or more types of structural units derived from monomers other than a propylene monomer. In this specification, a monomer other than a propylene monomer used in production of a polypropylene-based resin (e.g., production of a linear polypropylene-based resin) may be referred to as a "comonomer", and a "structural unit derived from a monomer(s) other than a propylene monomer" contained in a polypropylene-based resin may be referred to as a "comonomer unit".

Examples of such a comonomer(s) include: (a) α-olefin having 2 or 4 to 12 carbon atoms, such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene; (b) cyclic olefin such as cyclopentene, norbornene, and tetracyclo [6,2,11,8,13,6]-4-dodecene; (c) diene such as 5-methylene-2-norbornene, 5-ethylidene-2-norbornene, 1,4-hexadiene, methyl-1,4-hexadiene, and 7-methyl-1,6-octadiene; and (d) vinyl-based monomers such as vinyl chloride, vinylidene chloride, acrylonitrile, methacrylonitrile, vinyl acetate, acrylic acid, acrylic esters, methacrylic acid, methacrylic esters, maleic acid, maleic anhydride, styrene-based monomers, vinyltoluene, and divinylbenzene.

Examples of the acrylic esters include methyl acrylate, ethyl acrylate, butyl acrylate, hexyl acrylate, 2-ethylhexyl acrylate, lauryl acrylate, stearyl acrylate, 2-hydroxyethyl acrylate, 2-hydroxypropyl acrylate, and glycidyl acrylate.

Examples of the methacrylic esters include methyl methacrylate, ethyl methacrylate, butyl methacrylate, hexyl methacrylate, 2-ethylhexyl methacrylate, lauryl methacrylate, stearyl methacrylate, 2-hydroxyethyl methacrylate, 2-hydroxypropyl methacrylate, and glycidyl methacrylate.

Examples of the styrene-based monomers include styrene, methylstyrene, dimethylstyrene, alpha methylstyrene, paramethylstyrene, ethylstyrene, diethylstyrene, isopropylstyrene, t-butylstyrene, bromostyrene, dibromostyrene, tribromostyrene, chlorostyrene, dichlorostyrene, and trichlorostyrene.

The polypropylene-based resin has, as the comonomer unit(s), preferably a structural unit(s) derived from α-olefin having 2 or 4 to 12 carbon atoms, more preferably a structural unit(s) derived from ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, 1-decene and/or the like, more preferably a structural unit(s) derived from ethylene, 1-butene, isobutene, 1-pentene, 3-methyl-1-butene, 1-hexene, and/or 4-methyl-1-pentene, even more preferably a structural unit(s) derived from ethylene, 1-butene, isobutene, and/or 1-pentene, and particularly preferably a structural unit(s) derived from ethylene and/or 1-butene. According to this feature, there are the advantages that (a) a branched polypropylene-based resin having a high melt tension and a low gel fraction can be obtained and (b) a branched polypropylene-based resin obtained can provide polypropylene-based resin extruded expanded particles having excellent moldability.

The polypropylene-based resin is preferably a propylene homopolymer, a polypropylene-based block copolymer, a polypropylene-based alternating copolymer, and/or a polypropylene-based random copolymer, and is preferably a propylene homopolymer and/or a polypropylene-based random copolymer. According to this feature, there are the advantages that (a) a branched polypropylene-based resin having a high melt tension and a low gel fraction can be obtained and (b) a branched polypropylene-based resin obtained can provide polypropylene-based resin extruded expanded particles having excellent moldability.

The polypropylene-based resin contains the propylene units in a proportion of preferably not less than 90 mol%, more preferably not less than 93 mol%, even more preferably not less than 95 mol%, and particularly preferably not less than 97 mol%, with respect to 100 mol% of all structural units contained in the polypropylene-based resin. According to this feature, there is the advantage that a branched polypropylene-based resin having a high melt tension and a low gel fraction can be obtained.

A melting point of the polypropylene-based resin is not particularly limited. The melting point of the polypropylene-based resin is, for example, preferably 130°C to 165°C, more preferably 135°C to 164°C, even more preferably 138°C to 163°C, and particularly preferably 140°C to 162°C. In a case where the melting point of the polypropylene-based resin is not less than 130°C, it is less likely that dimensional stability of an in-mold foamed molded product is decreased, it is less likely that heat resistance of an in-mold foamed molded product becomes insufficient, and there is the advantage that an in-mold foamed molded product tends to have high compressive strength. In a case where the melting point of the polypropylene-based resin is not more than 165°C, there are the advantages that it is possible to mold the extruded expanded particles at a relatively low steam pressure and therefore possible to mold the extruded expanded particles with use of a general-purpose molding machine for polypropylene-based resin expanded particles.

In this specification, the melting point of the polypropylene-based resin is a value measured by a differential scanning calorimetry (hereinafter referred to as "DSC method"). A specific operational procedure is as follows: (1) a temperature of 5 mg to 6 mg of the polypropylene-based resin is increased from 40°C to 220°C at a temperature increase rate of 10°C/min so that the polypropylene-based resin is melted; (2) after that, the temperature of the melted polypropylene-based resin is decreased from 220°C to 40°C at a temperature decrease rate of 10°C/min so that the polypropylene-based resin is crystallized; and (3) then, the temperature of the crystallized polypropylene-based resin is increased from 40°C to 220°C at a temperature increase rate of 10°C/min. It is possible to determine, as the melting point of the polypropylene-based resin, a temperature at a peak (melting peak) in a DSC curve of the polypropylene-based resin which DSC curve is obtained in the second temperature increase (i.e., in (3)). Note that, in a case where a plurality of peaks (melting peaks) are present in a DSC curve of the polypropylene-based resin obtained during the second temperature increase by the above-described method, a temperature at a peak (melting peak) having the greatest melting heat quantity is defined as a melting point of the polypropylene-based resin. As a differential scanning calorimeter, for example, a differential scanning calorimeter of a DSC6200 type available from Seiko Instruments Inc. can be used.

A melt flow rate (MFR) of the polypropylene-based resin at 230°C is not particularly limited, and is preferably 0.5 g/10 minutes to 20.0 g/10 minutes, more preferably 1.0 g/10 minutes to 15.0 g, even more preferably 2.0 g/10 minutes to 12.0 g/10 minutes, and particularly preferably 2.0 g/10 minutes to 10.0 g/10 minutes. In a case where the MFR of the polypropylene-based resin at 230°C is not less than 0.5 g/10 minutes, there is the advantage that an obtained branched polypropylene-based resin can provide an in-mold foamed molded product which is less deformed and has a good surface property (beautiful surface). In a case where the MFR of the polypropylene-based resin at 230°C is not more than 20.0 g/10 minutes, there is the advantage that a composition has good expandability in extrusion expansion.

In this specification, the MFR of the polypropylene-based resin at 230°C is a value measured with use of an MFR measuring apparatus described in JIS K7210 under the following conditions: a diameter $\varphi$ of an orifice is $2.0959 \pm 0.0050$ mm; a length of the orifice is $8.000 \pm 0.025$ mm; a load is 2160 g; and a temperature is $230 \pm 0.2$°C.

The first resin mixture in accordance with the first production method may further contain another resin which is different from the polypropylene-based resin, provided that the advantages of Embodiment 1 of the present invention are not prevented from being brought about. Examples of the another resin different from the polypropylene-based resin include: (a) ethylene-based resins such as high-density polyethylene, medium-density polyethylene, low-density polyethylene, linear low-density polyethylene, linear very-low-density polyethylene, an ethylene/vinyl acetate copolymer, an ethylene/acrylic acid copolymer, and an ethylene/methacrylic acid copolymer; and (b) styrene-based resins such as polystyrene, a styrene/maleic anhydride copolymer, and a styrene/ethylene copolymer.

(Conjugated diene compound)

Examples of the conjugated diene compound that can be used in Embodiment 1 of the present invention include butadiene, isoprene, 1,3-heptadiene, 2,3-dimethylbutadiene, and 2,5-dimethyl-2,4-hexadiene. Each of these conjugated diene compounds may be used solely or two or more of these may be used in combination. Out of these conjugated diene compounds, butadiene and isoprene are particularly preferable because (a) they are inexpensive and easy to handle and (b) they are likely to undergo uniform reaction. In other words, the conjugated diene compound that can be used in Embodiment 1 of the present invention particularly preferably contains isoprene and/or butadiene, and most preferably consists only of isoprene and/or butadiene.

An amount of the conjugated diene compound used is 0.30 parts by weight to 1.50 parts by weight, preferably 0.30 parts by weight to 0.80 parts by weight, and more preferably 0.30 parts by weight to 0.60 parts by weight, with respect to 100 parts by weight of the polypropylene-based resin. In a case where the amount of the conjugated diene compound used is less than 0.30 parts by weight with respect to 100 parts by weight of the polypropylene-based resin, a degree of modification with respect to the polypropylene-based resin (i.e., the number of crosslinks introduced into the polypropylene-based resin) becomes insufficient. This consequently makes it impossible to sufficiently increase (e.g., to not less than 8.0 cN) a melt tension of an obtained branched polypropylene-based resin. In a case where the amount of the conjugated diene compound used is more than 1.50 parts by weight with respect to 100 parts by weight of the polypropylene-based resin, crosslinking between polypropylene-based resins by the conjugated diene compound becomes excessive, so that a branched polypropylene-based resin having a high viscosity is obtained. This consequently makes it difficult to obtain, from the branched polypropylene-based resin obtained, polypropylene-based resin extruded expanded particles having a high expansion ratio.

A monomer copolymerizable with the conjugated diene compound may be used in combination with the polypropylene-based resin, the conjugated diene compound, and the radical polymerization initiator, provided that the advantages of Embodiment 1 of the present invention are not impaired. In other words, the first resin mixture according to the first production method may further contain a monomer which is copolymerizable with the conjugated diene compound. Examples of the monomer copolymerizable with the conjugated diene compound include: (a) acrylic esters such as vinyl chloride, vinylidene chloride, acrylonitrile, methacrylonitrile, acrylamide, methacrylamide, vinyl acetate, acrylic acid, methacrylic acid, maleic acid, maleic anhydride, acrylic metal salt, methacrylic metal salt, methyl acrylate, ethyl acrylate, butyl acrylate, 2-ethylhexyl acrylate, and stearyl acrylate; and (b) methacrylic esters such as methyl methacrylate, ethyl methacrylate, butyl methacrylate, 2-ethylhexyl methacrylate, and stearyl methacrylate.

(Radical polymerization initiator)

The radical polymerization initiator in accordance with Embodiment 1 of the present invention is an organic peroxide having an ability to abstract hydrogen from a polypropylene-based resin and a conjugated diene compound. Examples of the radical polymerization initiator which is suitably used in Embodiment 1 of the present invention include organic peroxides such as ketone peroxide, peroxy ketal, hydroperoxide, dialkyl peroxide, diacyl peroxide, peroxy carbonate, peroxy dicarbonate, and peroxy ester.

In particular, the organic peroxide preferably has high hydrogen-abstracting ability. Examples of the organic peroxide having high hydrogen-abstracting ability suitably include: peroxy ketal such as 1,1-bis(t-butyl peroxy)3,3,5-trimethylcyclohexane, 1,1-bis(t-butyl peroxy)cyclohexane, n-butyl 4,4-bis(t-butyl peroxy)valerate, and 2,2-bis(t-butyl peroxy)butane; dialkyl peroxide such as dicumyl peroxide, 2,5-dimethyl-2,5-di(t-butyl peroxy)hexane, $\alpha,\alpha'$-bis(t-butyl peroxy-m-isopropyl)benzene, t-butyl cumyl peroxide, di-t-butyl peroxide, and 2,5-dimethyl-2,5-di(t-butyl peroxy)-3-hexyne; diacyl peroxide such as benzoyl peroxide; peroxy ester such as t-butyl peroxy octoate, t-butyl peroxy isobutyrate, t-butyl peroxy laurate, t-butyl peroxy 3,5,5-trimethylhexanoate, 2,5-dimethyl- 2,5-di(benzoyl peroxy)hexane, t-butyl peroxy acetate, t-butyl peroxy benzoate, and di-t-butyl peroxy isophthalate; peroxy carbonate such as t-butyl peroxy isopropylcarbonate; and the like. Among these, t-butyl peroxy isopropylcarbonate, t-butyl peroxy benzoate, and 2,2-bis(t-butyl peroxy)butane are preferable. In other words, in Embodiment 1 of the present invention, the radical polymerization initiator preferably contains at least one kind selected from the group consisting of peroxy ketals, peroxy esters, and peroxy carbonates, and more preferably consists only of at least one kind selected from the group. In Embodiment 1 of the present invention, the radical polymerization initiator particularly preferably contains at least one kind selected from peroxy carbonates, and may consist only of at least one kind selected from peroxy carbonates. As the organic peroxide, one type may be used solely or two or more types may be used in combination.

An amount of the radical polymerization initiator used is 0.50 parts by weight to 2.00 parts by weight, preferably 0.60 parts by weight to 1.80 parts by weight, more preferably 0.70 parts by weight to 1.60 parts by weight, even more preferably 0.90 parts by weight to 1.50 parts by weight, and particularly preferably 1.10 parts by weight to 1.50 parts by weight, with respect to 100 parts by weight of the polypropylene-based resin. In a case where the amount of the radical polymerization initiator used is less than 0.50 parts by weight with respect to 100 parts by weight of the polypropylene-based resin, a degree of modification with respect to the polypropylene-based resin can be insufficient. As a result, in a case where an obtained branched polypropylene-based resin is used for extrusion expansion, the branched polypropylene-based resin does not sufficiently exhibit a strain hardening property. Therefore, only extruded expanded particles having a high open cell ratio tend to be obtained. In a case where the amount of the radical polymerization initiator used is more than 2.00 parts by weight with respect to 100 parts by weight of the polypropylene-based resin, a gel amount of an obtained branched polypropylene-based resin can be increased due to an increase in abstraction of hydrogen from the polypropylene-based resin by the radical polymerization initiator. As a result, in a case where the branched polypropylene-based resin is used for extrusion expansion, only extruded expanded particles having a low expansion ratio and a high open cell ratio tend to be obtained.

(Other components)

In the first production method, another component or other components may be used as necessary, in addition to the polypropylene-based resin, the conjugated diene compound, and the radical polymerization initiator described above. In other words, the first resin mixture may further contain another component or other components as necessary. Examples of such another component or other components include (a) resins (hereinafter sometimes referred to as another resin) other than the polypropylene-based resin, (b) stabilizers such as an antioxidant, a metal deactivator, a phosphorous processing stabilizer, an ultraviolet absorber, an ultraviolet stabilizer, a fluorescent brightening agent, metallic soap, and an antacid adsorbent and/or (c) additives such as a cell adjusting agent, a coloring agent, a chain transfer agent, a lubricant, a plasticizer, a filler, a reinforcer, a flame retardant, and an antistatic agent. Examples of the another resin include: (a) polyolefin-based resins other than the polypropylene-based resin, such as an ethylene/propylene random copolymer, an ethylene/propylene block copolymer, and an ethylene/propylene alternating copolymer; (b) ethylene-based resins such as high-density polyethylene, medium-density polyethylene, low-density polyethylene, linear low-density polyethylene, linear very-low-density polyethylene, an ethylene/vinyl acetate copolymer, an ethylene/acrylic acid copolymer, and an ethylene/methacrylic acid copolymer; and (c) styrene-based resins such as polystyrene, a styrene/maleic anhydride copolymer, and a styrene/ethylene copolymer. As the another component or the other components, one type may be used solely or two or more types may be used in combination.

(First production device)

A first production device used in the first production method includes a die and a first melting and kneading section that includes a screw. The first melting and kneading section can be a single screw extruder having a single screw, or a multiple-screw extruder having a plurality of screws (e.g., a twin screw extruder having two screws). Among these devices, the multiple-screw extruder is preferably used, and a twin screw extruder is more preferably used as the first melting and kneading section, from the viewpoint of continuous kneading and scale-up.

The die provided in the first production device used in the first production method is located at an end of the first production device in an extruding direction, and includes at least one hole (hereinafter sometimes referred to as a discharge hole) for discharging a branched polypropylene-based resin. The number and diameter of holes provided in the die and a thickness of the die (a length of the hole in the extruding direction) are not particularly limited.

(First melting and kneading step)

The first melting and kneading step is a step of feeding, to the first melting and kneading section, a "raw material for a branched polypropylene-based resin" containing a polypropylene-based resin, a conjugated diene compound, and a radical polymerization initiator, and melting and kneading the first resin mixture containing these raw materials in the first melting and kneading section. Melting and kneading carried out in the first melting and kneading step indicate kneading, in the first melting and kneading section, the first resin mixture containing the polypropylene-based resin and the conjugated diene compound with the radical polymerization initiator at a temperature at which the polypropylene-based resin can be melted. The first melting and kneading step can be referred to also as a step of preparing (obtaining) a branched polypropylene-based resin by causing the conjugated diene compound and the radical polymerization initiator to react with the polypropylene-based resin.

The first melting and kneading step means a period from a time point at which an unmelted polypropylene-based resin is put in the first melting and kneading section to a time point at which an obtained branched polypropylene-based resin is caused to enter the die from the first melting and kneading section.

In the first melting and kneading step, it is only necessary that a branched polypropylene-based resin be ultimately prepared. A specific aspect of preparing a branched-structured polypropylene-based resin in the first melting and kneading step by feeding a polypropylene-based resin, a conjugated diene compound, and a radical polymerization initiator to a raw material feed opening of the first melting and kneading section and melting and kneading these raw materials is not particularly limited, and can be, for example, any of the following methods (a1) through (a4).

(a1) A first resin mixture is prepared by mixing an unmelted polypropylene-based resin, a conjugated diene compound, and a radical polymerization initiator simultaneously or in random order. Subsequently, the first resin mixture is fed to the first melting and kneading section, the first resin mixture is melted and kneaded, and thus a branched-structured polypropylene-based resin is prepared.

(a2) An unmelted polypropylene-based resin is fed to the first melting and kneading section, and this polypropylene-based resin is melted and kneaded. After that, to the melted and kneaded polypropylene-based resin, a conjugated diene compound and a radical polymerization initiator are fed through the same raw material feed opening or separate raw material feed openings which are provided in the middle of the first melting and kneading section, the obtained first resin mixture is further melted and kneaded, and a branched-structured polypropylene-based resin is thus prepared.

(a3) An unmelted polypropylene-based resin and a radical polymerization initiator are fed to the first melting and kneading section through the same raw material feed opening or separate raw material feed openings of the first melting and kneading section, and the polypropylene-based resin and the radical polymerization initiator are melted and kneaded. After that, to the melted and kneaded mixture of the polypropylene-based resin and the radical polymerization initiator, a conjugated diene compound is fed through a raw material feed opening provided in the middle of the first melting and kneading section, the obtained first resin mixture is further melted and kneaded, and a branched-structured polypropylene-based resin is thus prepared.

(a4) An unmelted polypropylene-based resin and a conjugated diene compound are fed to the first melting and kneading section through the same raw material feed opening or separate raw material feed openings of the first melting and kneading section, and the polypropylene-based resin and the conjugated diene compound are melted and kneaded. After that, to the melted and kneaded mixture of the polypropylene-based resin and the conjugated diene compound, a radical polymerization initiator is fed through a raw material feed opening provided in the middle of the first melting and kneading section, the obtained first resin mixture is further melted and kneaded, and a branched-structured polypropylene-based resin is thus prepared.

In a case where another component or other components are used as necessary in the first production method, a timing of feeding the another component or other components to the first melting and kneading section is not particularly limited. The another component or other components may be added to a first resin mixture which has been prepared in advance in (a1). Alternatively, the another component or other components may be fed to the first melting and kneading section in (a2) through (a4) through a raw material feed opening which is identical with or different from that used for feeing the unmelted polypropylene-based resin, the conjugated diene compound, or the radical polymerization initiator and together with or separately from these raw materials.

From the viewpoint that the polypropylene-based resin in the first resin mixture is in a melted state at a time point at which the reaction of the radical polymerization initiator is initiated, it is preferable to employ any of the methods (a2) through (a4). Depending on properties of the radical polymerization initiator and the conjugated diene compound used, the raw material feeding is more preferably carried out by the method (a3) from the viewpoint of safety.

(Discharging step)

The first production method includes a discharging step of discharging, from the die, a branched polypropylene-based resin obtained by melting and kneading the first resin mixture. The discharging step means a period from a time point at which the branched polypropylene-based resin is caused to enter the die from the first melting and kneading section to a time point at which the branched polypropylene-based resin is discharged from the die.

In the discharging step, the branched polypropylene-based resin is discharged in a strand shape from the die at a temperature at which the branched polypropylene-based resin can be discharged from the hole of the die. The branched polypropylene-based resin having a strand shape which has been discharged (also referred to simply as a "strand") is cooled and chopped, so that a branched polypropylene-based resin having an intended shape and an intended size can be obtained. A method of cooling the strand is not limited to any particular one. For example, water cooling in which water is used can be employed. The strand may be chopped after being cooled or may be alternatively cooled and chopped simultaneously.

(Specific energy $E_1$)

Specific energy $E_1$ [kWh/kg] is a value obtained by dividing electric power $P_1$ [kW] necessary for driving the screw of the first melting and kneading section (more specifically, electric power $P_1$ [kW] necessary for driving a motor that rotates the screw of the first melting and kneading section) by a discharge rate $Q_1$ [kg/h] of a branched polypropylene-based resin. In this specification, the "electric power $P_1$ necessary for driving the screw of the first melting and kneading section" may be referred to as "necessary power $P_1$".

By setting the specific energy $E_1$ to not less than 0.35 kWh/kg, a melt tension is improved and a gel fraction decreases in the obtained branched polypropylene-based resin. The specific energy $E_1$ is more preferably not less than 0.38 kWh/kg, and particularly preferably not less than 0.40 kWh/kg. The upper limit of the specific energy $E_1$ is not particularly limited, and is, from the viewpoint of energy efficiency and resin degradation, for example, preferably not more than 0.60 kWh/kg and more preferably not more than 0.50 kWh/kg.

The specific energy $E_1$ can be adjusted to an intended range by selecting, as appropriate, a temperature of the first melting and kneading section, a temperature of the first resin mixture in the first melting and kneading section, a time of the first melting and kneading step (melting and kneading time), a screw rotational speed $N_1$ of the first melting and kneading section, a discharge rate $Q_1$ of the branched polypropylene-based resin, a ratio ($L_1/D_1$) between an effective length $L_1$ of the screw and an opening diameter $D_1$ in the first melting and kneading section, and the like. Note that the "opening diameter $D_1$" is an internal diameter of a cylinder which accommodates the screw.

The necessary power $P_1$ can be calculated from a motor capacity of the screw of the first melting and kneading section, a motor current value of the screw of the first melting and kneading section, the discharge rate $Q_1$ of the branched polypropylene-based resin, the screw rotational speed $N_1$ of the first melting and kneading section, and the highest screw rotational speed of the first melting and kneading section. In calculation of the necessary power $P_1$, "motor torque" of the screw of the first melting and kneading section may be used instead of the "motor current value" of the screw of the first melting and kneading section.

The first melting and kneading step preferably further includes a specific energy $E_1$ adjustment step of adjusting the specific energy $E_1$ to be not less than 0.35 kWh/kg. The specific energy $E_1$ adjustment step is, for example, a step of adjusting at least one selected from the group consisting of the temperature of the first melting and kneading section, the temperature of the first resin mixture, the melting and kneading time, the screw rotational speed $N_1$ of the first melting and kneading section, the discharge rate $Q_1$ of the branched polypropylene-based resin, and the ratio $(L_1/D_1)$ between the effective length $L_1$ of the screw and the opening diameter $D_1$ in the first melting and kneading section.

The temperature of the first melting and kneading section is not particularly limited, and only needs to be a temperature at which the polypropylene-based resin can be melted and at which the specific energy $E_1$ is not less than 0.35 kWh/kg. Such a temperature falls within preferably a range of 160°C to 300°C, more preferably a range of 160°C to 250°C, and even more preferably a range of 160°C to 210°C. Examples of the temperature of the first melting and kneading section include a temperature of a cylinder (barrel) in which the screw is accommodated. It is preferable that the temperature of the first melting and kneading section falls within the above ranges, because (a) the polypropylene-based resin is melted and is not thermally decomposed and (b) the radical polymerization initiator is sufficiently decomposed.

In the first melting and kneading step, the temperature of the first resin mixture is not particularly limited, and only needs to be a temperature at which the specific energy $E_1$ is not less than 0.35 kWh/kg.

The melting and kneading time is not particularly limited, and only needs to be a time taken for obtaining the specific energy $E_1$ of not less than 0.35 kWh/kg. The melting and kneading time may be, for example, approximately 30 seconds to 10 minutes, approximately 30 seconds to 5 minutes, approximately 30 seconds to 2 minutes, or approximately 30 seconds to 1 minute. Note that the melting and kneading time is intended to be a time period of the first melting and kneading step, i.e., a time taken from when the polypropylene-based resin is fed to the first melting and kneading section to when the obtained branched polypropylene-based resin is discharging through the die. That is, the melting and kneading time can be said a time period during which the polypropylene-based resin that has been fed to the first melting and kneading section is present inside the first melting and kneading section.

The screw rotational speed $N_1$ of the first melting and kneading section is not particularly limited, and only needs to be the screw rotational speed $N_1$ that is necessary for obtaining the specific energy $E_1$ of not less than 0.35 kWh/kg. The screw rotational speed $N_1$ of the first melting and kneading section may be set, as appropriate, depending on a size of the first melting and kneading section (e.g., the ratio $(L_1/D_1)$ between the effective length $L_1$ of the screw and the opening diameter $D_1$ in the first melting and kneading section), the discharge rate $Q_1$, and/or the like.

The discharge rate $Q_1$ of the branched polypropylene-based resin is not particularly limited, and only needs to be a discharge rate $Q_1$ necessary for obtaining the specific energy $E_1$ of not less than 0.35 kWh/kg. The discharge rate $Q_1$ of the branched polypropylene-based resin may be set, as appropriate, depending on a size of the first melting and kneading section (e.g., the ratio $(L_1/D_1)$ between the effective length $L_1$ of the screw and the opening diameter $D_1$ in the first melting and kneading section), and the like.

The ratio $(L_1/D_1)$ between the effective length $L_1$ of the screw and the opening diameter $D_1$ in the first melting and kneading section is a numerical value that serves as an index for kneading efficiency of the screw. As the value of $L_1/D_1$ becomes larger, a workload during melting and kneading increases, and consequently the specific energy $E_1$ increases. The valued of $L_1/D_1$ can be selected as appropriate so that the specific energy $E_1$ is not less than 0.35 kWh/kg, and can be, for example, approximately 30 to 75, or approximately 35 to 65.

[1-3. Branched-structured polypropylene-based resin]

A branched polypropylene-based resin produced by the production method described in the section [1-2. Method for producing branched-structured polypropylene-based resin] is also included in Embodiment 1 of the present invention.

In this specification, the "branched-structured polypropylene-based resin produced by the method described in the section [1-2. Method for producing branched-structured polypropylene-based resin]", i.e., the "branched-structured polypropylene-based resin in accordance with Embodiment 1 of the present invention" may be referred to as a "present branched polypropylene-based resin".

The present branched polypropylene-based resin has the advantage that both a high melt tension and a low gel fraction are achieved. The present branched polypropylene-based resin has a high melt tension and a low gel fraction. Therefore, by applying this branched polypropylene-based resin to an extrusion expansion method, it is possible to provide polypropylene-based resin extruded expanded particles having good moldability. This seems to be partly because cell membranes are sufficiently retained in the polypropylene-based resin extruded expanded particles obtained by the extrusion expansion method from the present branched polypropylene-based resin, and therefore the polypropylene-based resin extruded expanded particles have a sufficiently low open cell ratio. Note that the present invention is not limited at all to such a presumption.

A melt tension of the present branched polypropylene-based resin at 200°C is not particularly limited, and is preferably not less than 8.0 cN, preferably not less than 8.5 cN, more preferably not less than 9.0 cN, and even more preferably not less than 9.5 cN. The upper limit of the melt tension at 200°C is not particularly limited.

In a case where the melt tension of the branched polypropylene-based resin falls within the above range and polypropylene-based resin extruded expanded particles are produced by the extrusion expansion method with use of the branched polypropylene-based resin, the branched polypropylene-based resin has a sufficiently high melt tension during expansion. This consequently brings about the advantage that it is possible to sufficiently retain cell membranes in the polypropylene-based resin extruded expanded particles obtained. With the first production method described in the section [1-2. Method for producing branched-structured polypropylene-based resin], it is possible to obtain a branched polypropylene-based resin having a melt tension falling within the above-described range.

The following description will discuss a method of measuring a melt tension employed in this specification. The melt tension is measured with use of Capilograph 1D (available from Toyo Seiki Seisaku-sho, Ltd.) in this specification. Specifically, the melt tension is measured by the following steps (1) through (5): (1) a barrel which has a diameter of 9.55 mm and which has been heated to a test temperature (200°C) is filled with a sample resin (branched polypropylene-based resin) for measurement; (2) next, the sample resin is heated for 10 minutes in the barrel which has been heated to the test temperature (200°C); (3) subsequently, while the sample resin is taken out in a strand shape from a capillary die (diameter: 1.0 mm, length: 10 mm) at a piston falling speed kept constant (10 mm/minute), this strand-like sample resin is caused to pass through a pulley which is for detecting a tension and which is located 350 mm below the capillary die, and then wind-up of the strand-like sample resin is started with use of a wind-up roll; (4) after take-off of the strand-like sample resin becomes stable, the wind-up speed of the strand-like sample resin is increased from an initial speed of 1.0 m/minute to a speed of 200 m/minute at a constant rate in 4 minutes; and (5) a load acting on the pulley, which is equipped with a load cell, at a time when the strand-like sample resin fractures is measured as the melt tension.

A gel fraction of the present branched polypropylene-based resin is not particularly limited, and is preferably as small as possible. The gel fraction is, for example, preferably not more than 10.0% by weight, more preferably not more than 9.0% by weight, more preferably not more than 8.5% by weight, even more preferably not more than 8.0% by weight, furthermore preferably not more than 7.5% by weight, and particularly preferably not more than 7.0% by weight.

In a case where the gel fraction of the branched polypropylene-based resin falls within the ranges described above, it can be presumed that the branched polypropylene-based resin has been obtained as a result of crosslinking at an appropriate frequency. Therefore, the branched polypropylene-based resin has the following advantages (a) and (b). That is, in a case where polypropylene-based resin extruded expanded particles are produced by the extrusion expansion method with use of the branched polypropylene-based resin, (a) the branched polypropylene-based resin has a sufficiently high melt tension during expansion and (b) it is possible to suppress generation of gel in the obtained polypropylene-based resin extruded expanded particles. Here, the "gel" is a gel-like (referred to also as jelly-like) foreign matter locally generated in the polypropylene-based resin extruded expanded particles due to excessive crosslinking. The gel can cause the break of the cell membranes in the polypropylene-based resin extruded expanded particles. With the first production method described in the section [1-2. Method for producing branched-structured polypropylene-based resin], it is possible to obtain a branched polypropylene-based resin having a gel fraction falling within the above-described range.

Note that, in this specification, the "gel fraction" is a value obtained by treating a sample constituted by the branched polypropylene-based resin with use of a metal gauze which has a mesh size of 37 $\mu$m (400 mesh) in p-xylene at 130°C for 6 hours, then drying and weighing the residue remaining in the metal gauze, and carrying out calculation according to the following expression (1):

Gel fraction (% by weight) = (weight of residue / weight of sample) $\times$ 100.          (1):

The following description will discuss a method of measuring the gel fraction in detail. A method of measuring the gel fraction is not particularly limited. For example, the gel fraction can be determined by sequentially carrying out the following steps (1) through (10) with use of a gel fraction measuring device.

(1) 0.5 g of the branched polypropylene-based resin is precisely weighed as a sample.
(2) The sample is put in a metal gauze which has a bag shape, has a pleated side surface, and has a mesh size of 37 $\mu$m (400 mesh).
(3) A stirrer piece and the metal gauze, in which the sample of (2) is placed, are put in an eggplant-shaped flask having a capacity of 300 mL, and 150 mL of p-xylene is further put in the eggplant-shaped flask.
(4) Stirring of the solution is carried out in the eggplant-shaped flask at 130°C and 80 rpm for 1 hour with use of an oil bath device and a stirrer.
(5) The p-xylene in the eggplant-shaped flask is completely replaced with new p-xylene, and then the solution in the eggplant-shaped flask is stirred for 1 hour.
(6) The p-xylene in the eggplant-shaped flask is completely replaced with new p-xylene, and then the solution in the eggplant-shaped flask is stirred for 4 hours.

(7) The metal gauze is taken out from the eggplant-shaped flask with use of tweezers, and washed with p-xylene so that matters adhering to the side surface of the metal gauze are removed.

(8) The residue (resin remaining undissolved) in the metal gauze is dried at 80°C for 8 hours in a vacuum dryer while the residue is in the metal gauze.

(9) The residue is left to stand to cool down, and then a weight of the residue is measured in the state where the residue is in the 400-mesh metal gauze.

(10) The gel fraction (% by weight) is calculated based on the following expression:

Gel fraction (% by weight) = weight of residue (g) / weight of sample (0.5 g) $\times$ 100.

Here, the weight of the residue in the metal gauze is obtained by subtracting a weight of only the metal gauze which has not been subjected to the filtration from a weight of the metal gauze which has been subjected to filtration and drying (including the residue).

An MFR of the present branched polypropylene-based resin at 230°C is not particularly limited and is, for example, preferably 0.5 g/10 minutes to 20.0 g/10 minutes, more preferably 1.0 g/10 minutes to 15.0 g/10 minutes, even more preferably 1.5 g/10 minutes to 10.0 g/10 minutes, furthermore preferably 2.0 g/10 minutes to 10.0 g/10 minutes, and particularly preferably 2.0 g/10 minutes to 5.0 g/10 minutes. In a case where the MFR of the present branched polypropylene-based resin at 230°C is not less than 0.5 g/10 minutes, there is the advantage that the branched polypropylene-based resin can provide an in-mold foamed molded product which is less deformed and has a good surface property (beautiful surface). In a case where the MFR of the present branched polypropylene-based resin at 230°C is not more than 20 g/10 minutes, there is the advantage that, in extrusion expansion of a composition containing the branched polypropylene-based resin, the composition has good expandability.

In this specification, the MFR of the branched polypropylene-based resin at 230°C can be measured by a method similar to that for the value of MFR of the polypropylene-based resin at 230°C, except that the branched polypropylene-based resin is used instead of the polypropylene-based resin.

The present branched polypropylene-based resin contains a constitutional unit derived from a polypropylene-based resin and a constitutional unit derived from a conjugated diene compound. In a case where another resin is used in the production of the branched polypropylene-based resin, the present branched polypropylene-based resin contains the another resin and/or components derived from the another resin. The present branched polypropylene-based resin can contain a constitutional unit derived from a radical polymerization initiator. Note, here, that the "constitutional unit derived from a radical polymerization initiator" indicates a constitutional unit derived from various substances generated by decomposition of the radical polymerization initiator during production of a branched polypropylene-based resin. In a case where another component or other components are used in the production of the branched polypropylene-based resin, the present branched polypropylene-based resin contains the another component or other components. As an aspect of each of the polypropylene-based resin, the another resin, the conjugated diene compound, the radical polymerization initiator, and the another component or other components, the description given in the section [1-2. Method for producing branched-structured polypropylene-based resin] can apply as appropriate.

A shape and a size of the present branched polypropylene-based resin are not limited to any particular ones. The present branched polypropylene-based resin may be in the form of, for example, pellets. In this specification, the pellets mean a material obtained by granulation of a polymer (resin) into small pieces of molded material having substantially constant length and thickness in, for example, a cylindrical shape, a spherical shape, an elliptic-cylindrical shape, or a polygonal prism shape (e.g., triangular prism, quadratic prism, pentagonal prism, or hexagonal prism). A size of the pellets is not particularly limited, provided that the pellets can be handled, and can be, for example, approximately 2.5 mm to 3.5 mm in length and 2.5 mm to 3.5 mm in thickness.

(Application)

Examples of applications of the present branched polypropylene-based resin include extruded expanded particles and an extruded expanded sheet. By extruding and expanding a composition containing the present branched polypropylene-based resin and a blowing agent, it is possible to obtain extruded expanded particles or an extruded expanded sheet. The present branched polypropylene-based resin can be used in injection foam molding, such as core-back molding, by using the branched polypropylene-based resin and the blowing agent. The present branched polypropylene-based resin has a high melt tension, and therefore there is the advantage that a film obtained by molding the branched polypropylene-based resin into a film shape is difficult to cut. Therefore, the present branched polypropylene-based resin can be used in a non-foamed film and in surface coating of paper. The present branched polypropylene-based resin can be used also in normal injection molding (non-foaming).

[1-4. Method for producing polypropylene-based resin extruded expanded particles]

A method for producing polypropylene-based resin extruded expanded particles in accordance with Embodiment 1 of the present invention includes: a first step of melting and kneading, in a second production device, (a) a branched-structured polypropylene-based resin obtained by the production method described in the section of [1-2. Method for producing branched-structured polypropylene-based resin] or a branched-structured polypropylene-based resin described in the section of [1-3. Branched-structured polypropylene-based resin] and (b) a blowing agent; and a second step of discharging, through a die, a composition obtained in the first step to a region having a pressure lower than an internal pressure of the second production device.

Since the method for producing polypropylene-based resin extruded expanded particles in accordance with Embodiment 1 of the present invention is arranged as described above, it is possible to provide polypropylene-based resin extruded expanded particles having good moldability.

(First step)

The first step will be described in detail. Specific examples of the first step include a step of melting the branched polypropylene-based resin and dissolving the blowing agent in the branched polypropylene-based resin in the second production device. The first step can be referred to also as a step of preparing a melted and kneaded material of a composition containing the branched polypropylene-based resin and the blowing agent.

The blowing agent used in an embodiment of the present invention is not particularly limited, and a known organic blowing agent or a known inorganic blowing agent can be used. Examples of the organic blowing agent include aliphatic hydrocarbons such as propane and fluorinated hydrocarbons such as difluoroethane. Examples of the inorganic blowing agent include inorganic gases such as a carbonic acid gas, air, and nitrogen, and water. As the blowing agent, one type may be used solely or two or more types may be used in combination. An amount of the blowing agent used in the first step only needs to be adjusted as appropriate depending on a kind of the blowing agent and a target expansion ratio of the polypropylene-based resin extruded expanded particles.

In the first step, it is possible, as necessary, to further use a cell nucleating agent, a stabilizer (e.g., an antioxidant, a metal deactivator, a phosphorous processing stabilizer, an ultraviolet absorber, an ultraviolet stabilizer, a fluorescent brightening agent, metallic soap, an antacid adsorbent, and the like), and an additive (e.g., a coloring agent, a crosslinking agent, a chain transfer agent, a lubricant, a plasticizer, a filler, a reinforcer, a pigment, a dye, a flame retardant, an antistatic agent, and the like).

In the first step, the branched polypropylene-based resin and the blowing agent, as well as another component or other components that can be optionally used, may be mixed before being fed to the second production device or may be mixed in the second production device. In other words, in the first step, a composition may be fed to the second production device or a composition may be prepared (completed) in the second production device. In the first step, there is no particular limitation to a method and an order in which (i) the branched polypropylene-based resin, the blowing agent, and another component or other components that can be optionally used are mixed or (ii) the branched polypropylene-based resin, the blowing agent, and another component or other components that can be optionally used are fed to the second production device.

The composition obtained in the first step may be cooled prior to extrusion of the composition into the low pressure region.

(Second step)

The second step is a step in which a composition obtained in the first step, i.e., a melted and kneaded composition is extruded through a die to a region having a pressure lower than an internal pressure of the second production device, and the extruded composition is chopped. Through the second step, extruded expanded particles are obtained. Therefore, the second step can be referred to also as a granulation step of granulating polypropylene-based resin extruded expanded particles.

In the second step, the region where the composition obtained in the first step is extruded is not particularly limited, provided that the pressure of the region is lower than the internal pressure of the second production device. For example, in the second step, the composition obtained in the first step may be extruded to a gas phase or may be extruded to a liquid phase.

The composition which has been extruded to the region having the pressure lower than the internal pressure of the second production device in the second step immediately begins to expand. In the second step, the composition which is expanding may be chopped, or the composition which has finished expanding may be chopped. In a case where the composition which is expanding is chopped, the chopped composition can complete expanding in the region where the composition is extruded.

Depending on the region where the composition obtained in the first step is extruded and the method of chopping the composition, the second step (granulation step) can be roughly classified into two types, i.e., a cold cutting method and a die face cutting method. The cold cutting method encompasses a method in which (i) the composition which contains the blowing agent and has been extruded through the die is expanded and (ii) a strand of expanded body thus obtained is taken up and then finely cut while being cooled in a water tank (strand cut method). The die face cutting method is a method in which a composition which has been extruded from a hole of die is cut with use of a cutter which rotates while being in contact with a die surface or while securing a small gap with respect to the die surface.

The die face cutting method is further classified into the following three methods on the basis of a difference in cooling method: an underwater cutting (hereinafter sometimes referred to as "UWC") method; a watering cutting (hereinafter sometimes referred to as "WRC") method; and a hot cutting (hereinafter sometimes referred to as "HC") method. The UWC method is a method in which (i) a chamber attached to a leading end of a die is filled with a cooling water, which has been adjusted to have a predetermined pressure, so that the cooling water is in contact with a resin discharge surface of the die and (ii) a composition which has been extruded from a hole of the die is cut in water. The WRC method is a method in which a cooling drum that is connected to a die and that has an inner peripheral surface along which cooling water flows is disposed at the downstream side of the die, and a composition which has been cut with a cutter in air is cooled in the cooling water while being expanded or after being expanded. The HC method is a method in which a composition which has been cut with a cutter in air is cooled in air while being expanded or after being expanded. The HC method also includes a mist cutting method that further includes a step of spraying mixed mist of water and air.

(1-5. Polypropylene-based resin extruded expanded particles)

Polypropylene-based resin extruded expanded particles produced by the production method described in the section [1-4. Method for producing polypropylene-based resin extruded expanded particles] are also included in Embodiment 1 of the present invention. The polypropylene-based resin extruded expanded particles in accordance with Embodiment 1 of the present invention can be said to be obtained by expanding the branched polypropylene-based resin or branched polypropylene-based resin pellets described in the section [1-3. Branched-structured polypropylene-based resin]. The polypropylene-based resin extruded expanded particles in accordance with Embodiment 1 of the present invention can be said to include the branched polypropylene-based resin or branched polypropylene-based resin pellets described in the section [1-3. Branched-structured polypropylene-based resin].

In this specification, the "polypropylene-based resin extruded expanded particles" may also be referred to as "extruded expanded particles". In this specification, the "polypropylene-based resin extruded expanded particles produced by the method described in the section [1-4. Method for producing polypropylene-based resin extruded expanded particles]", i.e., the "polypropylene-based resin extruded expanded particles obtained by the method for producing polypropylene-based resin extruded expanded particles in accordance with Embodiment 1 of the present invention" may be referred to as "first extruded expanded particles".

The first extruded expanded particles have the above described feature, and therefore have the advantage of excellent moldability.

[1-6. Method for producing polypropylene-based resin foamed molded product]

The method for producing a polypropylene-based resin foamed molded product in accordance with Embodiment 1 of the present invention includes a heating step of filling a molding space, which is formed by at least two molds included in a mold, with polypropylene-based resin extruded expanded particles (i.e., first extruded expanded particles) obtained by the method described in the section [1-4. Method for producing polypropylene-based resin extruded expanded particles] or polypropylene-based resin extruded expanded particles (i.e., first extruded expanded particles) described in the section [1-5. Polypropylene-based resin extruded expanded particles], and then heating the polypropylene-based resin extruded expanded particles in the molding space.

In this specification, the "polypropylene-based resin foamed molded product" may be referred to as a "foamed molded product". In this specification, the "polypropylene-based resin foamed molded product in accordance with Embodiment 1 of the present invention" may be referred to as a "first foamed molded product". In some cases, the foamed molded product obtained by production with use of a mold is referred to as an in-mold foamed molded product.

The method for producing a polypropylene-based resin foamed molded product in accordance with Embodiment 1 of the present invention is arranged as described above. Therefore, it is possible to provide a polypropylene-based resin in-mold foamed molded product which has a high expansion ratio and excellent fusibility.

In the method for producing a polypropylene-based resin foamed molded product in accordance with Embodiment 1 of the present invention, a mold to be used is not particularly limited. The mold can include, for example, a fixed mold that cannot be moved and a movable mold that can be moved, as the at least two molds. When the movable mold approaches the fixed mold, a molding space is formed inside the fixed mold and the movable mold. Note that, when the extruded expanded particles in the molding space are heated, a mold frame of the fixed mold can be in contact with a mold frame of the movable mold (i.e., the mold can be sealed). Meanwhile, when filling the molding space with the extruded expanded particles, the mold frame of the fixed mold and the mold frame of the movable mold may not be in contact with each other, and a small gap (referred to also as cracking) may be formed between the mold frame of the fixed mold and the mold frame of the movable mold.

In the method for producing a polypropylene-based resin foamed molded product in accordance with Embodiment 1 of the present invention, a method of filling the molding space with polypropylene-based resin extruded expanded particles and a method of heating the polypropylene-based resin extruded expanded particles in the mold are not particularly limited. Examples of the methods include the following methods (b1) through (b4).

(b1) Extruded expanded particles are pressurized with an inorganic gas in a container, and the extruded expanded particles are impregnated with the inorganic gas, and a predetermined intraparticulate pressure is applied to the extruded expanded particles. After that, a molding space of a mold is filled with the extruded expanded particles, and the extruded expanded particles in the molding space are heated with steam.

(b2) A molding space of a mold is filled with extruded expanded particles. Next, the extruded expanded particles in the molding space are compressed so as to reduce a volume in the molding space by 10% to 75%, and then the extruded expanded particles in the molding space are heated with steam.

(b3) Extruded expanded particles are compressed with gas pressure and a molding space of a mold is filled with the extruded expanded particles. Subsequently, the extruded expanded particles in the molding space are heated with steam while utilizing resilience of the extruded expanded particles in the molding space.

(b4) A molding space of a mold is filled with the extruded expanded particles which have not been particularly pretreated. Subsequently, the extruded expanded particles in the molding space are heated with steam.

In the production of the present foamed molded product, a pressure of the steam (hereinafter sometimes referred to as a steam pressure) for heating the extruded expanded particles varies in accordance with characteristics of the extruded expanded particles used, and cannot be generally defined.

In the method (b1), at least one kind selected from the group consisting of air, nitrogen, oxygen, carbon dioxide, helium, neon, argon, and the like can be used as the inorganic gas. Among these inorganic gases, air and/or carbon dioxide are preferable.

An internal pressure of the expanded particles in the method (b1) is preferably 0.05 MPa to 0.30 MPa (absolute pressure) and preferably 0.06 MPa to 0.25 MPa (absolute pressure).

In the method (b1), a temperature in the container when impregnating the expanded particles with the inorganic gas is preferably 10°C to 90°C, and more preferably 40°C to 90°C.

<Embodiment 2>

Embodiment 2 relates to a method for producing polypropylene-based resin extruded expanded particles.

However, the conventional technique related to extruded expanded particles as in Patent Literature 2 is not sufficient in terms of moldability of polypropylene-based resin extruded expanded particles, and there is room for further improvement.

Embodiment 2 has been made in view of the above problem, and the object thereof is to provide polypropylene-based resin extruded expanded particles having excellent moldability, and a method for producing the same.

The inventors of the present invention have carried out diligent study in order to attain the object. As a result, the inventors of the present invention have uniquely obtained findings below, and completed Embodiment 2 of the present invention: by melting and kneading a branched-structured polypropylene-based resin and a blowing agent while controlling specific energy, which is introduced to the melting and kneading, to be not more than a predetermined value, it is surprisingly possible to broaden a molding range during molding with use of the obtained polypropylene-based resin extruded expanded particles, i.e., to obtain polypropylene-based resin extruded expanded particles having excellent moldability.

The following description will discuss in more detail the technical idea of Embodiment 2.

[2-1. Technical idea of Embodiment 2]

A polypropylene-based resin in-mold foamed molded product is produced by a method in which a mold is filled with polypropylene-based resin expanded particles and the polypropylene-based resin expanded particles are heated to fuse together by steam or the like. Polypropylene-based resin in-mold foamed molded products are demanded to have good physical properties such as capability of being formed in any shape, shock-absorbing properties, lightweight properties, compressive strength, and heat insulating properties.

The physical properties of the polypropylene-based resin in-mold foamed molded product can be determined by various factors, and it has been found that the physical properties vary greatly particularly in accordance with a steam pressure during molding (e.g., during in-mold foam molding, more specifically, during heating for fusion). Therefore, strict control of the steam pressure during molding has been necessary in order to obtain a polypropylene-based resin in-mold foamed molded product having intended physical properties.

Under the circumstances, the inventors of the present invention have carried out diligent studies on increasing the degree of freedom of the steam pressure during molding. As a result, the inventors of the present invention have uniquely found that, in a case where polypropylene-based resin extruded expanded particles produced by a particular production method are used, the degree of freedom of the steam pressure during molding is increased. More specifically, the inventors of the present invention have uniquely obtained findings below, and completed Embodiment 2 of the present invention: in production of polypropylene-based resin extruded expanded particles, by melting and kneading a branched-structured polypropylene-based resin and a blowing agent while controlling specific energy, which is introduced to the melting and kneading, to be not more than a predetermined value, it is surprisingly possible to increase the degree of freedom of steam pressure during molding (molding range) with use of the obtained polypropylene-based resin extruded expanded particles.

By using the polypropylene-based resin extruded expanded particles having a broad molding range during molding, even in a case where molding is carried out at a steam pressure that is higher or lower than a conventionally acceptable range, it is possible to obtain a polypropylene-based resin in-mold foamed molded product which has excellent compressive strength, excellent fusibility, and/or a beautiful surface.

The following description will discuss Embodiment 2 of the present invention. Note, however, that the present invention is not limited to Embodiment 2. For aspects of Embodiment 2 of the present invention except for those described below in detail, the descriptions of Embodiment 1 apply as appropriate.

[2-2. Method for producing polypropylene-based resin extruded expanded particles]

A method for producing polypropylene-based resin extruded expanded particles in accordance with Embodiment 2 of the present invention is carried out using a third production device including a second melting and kneading section that has a plurality of screws and a granulation section that has a die, the method including: a second melting and kneading step of melting and kneading, in the second melting and kneading section, a blowing agent and a branched-structured polypropylene-based resin; and an extrusion expansion step of discharging, through the die, a composition obtained in the second melting and kneading step to a region having a pressure lower than an internal pressure of the third production device, specific energy $E_2$ being not more than 0.190 kWh/kg. Here, the specific energy $E_2$ is a value obtained by dividing electric power $P_2$ that is necessary for driving the plurality of screws of the second melting and kneading section by a discharge rate $Q_2$ of the composition.

According to Embodiment 2 of the present invention, it is possible to provide polypropylene-based resin extruded expanded particles having excellent moldability, and a method for producing the same.

In this specification, the "method for producing polypropylene-based resin extruded expanded particles in accordance with Embodiment 2 of the present invention" may be referred to as a "second production method". The extruded expanded particles obtained by the second production method can be formed into a polypropylene-based resin foamed molded product by molding (e.g., in-mold foam molding) of the extruded expanded particles.

The second production method has the above feature, and therefore has the advantage that it is possible to provide extruded expanded particles having excellent moldability. The second production method also has the advantage that it is possible to provide extruded expanded particles having a low open cell ratio. In this specification, moldability of extruded expanded particles is evaluated based on a molding range of the extruded expanded particles. The molding range of the extruded expanded particles will be described later.

First, raw materials (components) used in the second production method will be described, and then each step of the second production method will be described.

(2-2-1. Second resin mixture)

In the second production method, raw materials (components) other than a blowing agent may be referred to as a "second resin mixture". The second resin mixture contains a branched-structured polypropylene-based resin and can further optionally contain an additive such as a cell nucleating agent.

(Linear polypropylene-based resin)

The following description will discuss a linear polypropylene-based resin which is used in the second production method and which is a raw material for a branched polypropylene-based resin. Each aspect concerning the linear polypropylene-based resin described below in detail may be read as an aspect concerning a main chain of the branched polypropylene-based resin.

In Embodiment 2, the linear polypropylene-based resin may be (a) a homopolymer of propylene, (b) a block copolymer, an alternating copolymer, or a random copolymer of propylene and a monomer(s) other than propylene, or (c) a mixture of two or more of these.

In Embodiment 2, the linear polypropylene-based resin may have one or more units of structural units derived from a monomer(s) other than a propylene monomer (i.e., structural units derived from a comonomer (comonomer units)) in addition to the propylene units or may have one or more types of structural units derived from monomers other than a propylene monomer.

The comonomer in Embodiment 2 is identical with that described in the section (Polypropylene-based resin) in Embodiment 1. Therefore, the description applies here, and is not repeated.

The linear polypropylene-based resin has, as the comonomer unit(s), preferably a structural unit(s) derived from α-olefin having 2 or 4 to 12 carbon atoms, more preferably a structural unit(s) derived from ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, 1-decene and/or the like, more preferably a structural unit(s) derived from ethylene, 1-butene, isobutene, 1-pentene, 3-methyl-1-butene, 1-hexene, and/or 4-methyl-1-pentene, even more preferably a structural unit(s) derived from ethylene, 1-butene, isobutene, and/or 1-pentene, and particularly preferably a structural unit(s) derived from ethylene and/or 1-butene. According to this feature, there are the advantages that (a) a branched polypropylene-based resin having a high melt tension and a low gel fraction can be obtained and (b) a branched polypropylene-based resin obtained can provide polypropylene-based resin extruded expanded particles having excellent moldability.

The linear polypropylene-based resin is preferably a propylene homopolymer, a polypropylene-based block copolymer, a polypropylene-based alternating copolymer, and/or a polypropylene-based random copolymer, and is more preferably a propylene homopolymer and/or a polypropylene-based random copolymer. According to this feature, there are the advantages that (a) a branched polypropylene-based resin having a high melt tension and a low gel fraction can be obtained and (b) a branched polypropylene-based resin obtained can provide polypropylene-based resin extruded expanded particles having excellent moldability.

The linear polypropylene-based resin contains the propylene units in a proportion of preferably not less than 90 mol%, more preferably not less than 93 mol%, even more preferably not less than 95 mol%, and particularly preferably not less than 97 mol%, with respect to 100 mol% of all structural units contained in the linear polypropylene-based resin. According to this feature, there is the advantage that a branched polypropylene-based resin having a high melt tension and a low gel fraction can be obtained.

A melting point of the linear polypropylene-based resin is not particularly limited. The melting point of the linear polypropylene-based resin is, for example, preferably 130°C to 165°C, more preferably 135°C to 164°C, even more preferably 138°C to 163°C, and particularly preferably 140°C to 162°C. In a case where the melting point of the linear polypropylene-based resin falls within the above range, there are the following advantages that: (a) extruded expanded particles obtained have excellent moldability; and (b) the extruded expanded particles can provide a foamed molded product having excellent breakage resistance. There is the advantage that, in a case where the melting point of the linear polypropylene-based resin is not less than 130°C, it is less likely that dimensional stability of a foamed molded product is decreased, it is less likely that heat resistance of a foamed molded product becomes insufficient, and a foamed molded product tends to have high compressive strength. In a case where the melting point of the linear polypropylene-based resin is not more than 165°C, there are the advantages that it is possible to mold the extruded expanded particles at a relatively low steam pressure and therefore possible to mold the extruded expanded particles with use of a generalpurpose molding machine for polypropylene-based resin expanded particles.

In this specification, the melting point of the linear polypropylene-based resin is a value measured by a method similar to the method of measuring the melting point of a polypropylene-based resin described in the section (Polypropylene-based resin), except that a "linear polypropylene-based resin" is used instead of the "polypropylene-based resin". Note that, as with the foregoing melting point of the polypropylene-based resin, in a case where a plurality of peaks (melting peaks) are present in a DSC curve of the linear polypropylene-based resin obtained during the second temperature increase, a temperature at a peak (melting peak) having the greatest melting heat quantity is defined as a melting point of the linear polypropylene-based resin.

An MFR of the linear polypropylene-based resin at 230°C is not particularly limited. The MFR of the linear polypropylene-based resin at 230°C is, for example, preferably 0.5 g/10 minutes to 50.0 g/10 minutes, more preferably 1.0 g/10 minutes to 30.0 g/10 minutes, even more preferably 2.0 g/10 minutes to 20.0 g/10 minutes, and particularly preferably 2.0 g/10 minutes to 10.0 g/10 minutes. In a case where the MFR of the linear polypropylene-based resin at 230°C falls within the above range, there is the advantage that it is possible to easily obtain a branched polypropylene-based resin having an MFR at 230°C of 0.5 g/10 minutes to 20.0 g/10 minutes.

In this specification, the MFR of the linear polypropylene-based resin at 230°C is a value measured by a method similar to the method of measuring the MFR of a polypropylene-based resin at 230°C described in the section (Polypropylene-based resin), except that a "linear polypropylene-based resin" is used instead of the "polypropylene-based resin".

(Branched-structured polypropylene-based resin)

The branched-structured polypropylene-based resin (branched polypropylene-based resin) that is used in Embodiment 2 can be obtained by introducing a branched structure into a linear polypropylene-based resin. Examples of a method of introducing a branched structure into a linear polypropylene-based resin in Embodiment 2 include, but are not particularly limited to, (c1) a method of irradiating a linear polypropylene-based resin with radial rays, and (c2) a method of melting and kneading a mixture containing a linear polypropylene-based resin, a conjugated diene compound, and a radical polymerization initiator.

Examples of a specific method of the method (c1) include a method disclosed in Japanese Translation of PCT International Publication, Tokuhyo, No. 2002-542360.

The method (c2) will be described in more detail. In the method (c2), it is possible to obtain a branched polypropylene-based resin, for example, by sequentially carrying out the following steps (i) through (iv): (i) a mixture containing a linear polypropylene-based resin, a conjugated diene compound, and a radical polymerization initiator is melted and kneaded with use of a device including a die; (ii) the melted and kneaded material thus obtained is extruded through the die; (iii) the melted and kneaded material thus extruded (referred to also as a strand) is cooled; and (iv) simultaneously with and/or after cooling of the strand, the strand is chopped. Examples of a specific method of the method (c2) include a method disclosed in WO2020/004429 and the first production method.

In Embodiment 2, the branched polypropylene-based resin is preferably a branched polypropylene-based resin obtained by the method (c2) described above, and is particularly preferably a branched polypropylene-based resin obtained by the first production method described above. With this feature, (i) it is possible to stably introduce a branched structure into a linear polypropylene-based resin, and it is possible to achieve high reproducibility in introduction of the branched structure, and/or (ii) it is possible to obtain a branched polypropylene-based resin with high productivity and without the need for complicated equipment.

In Embodiment 2, a melt tension of the branched polypropylene-based resin can be higher than that of the linear polypropylene-based resin. The melt tension of the branched polypropylene-based resin at 200°C is preferably not less than 8.0 cN, more preferably not less than 9.0 cN, and even more preferably not less than 10.0 cN. By using a branched polypropylene-based resin having a high melt tension as a raw material, it is possible to broaden a molding range of the obtained polypropylene-based resin extruded expanded particles.

A method of measuring the melt tension of the branched polypropylene-based resin in Embodiment 2 is identical with that described in the section [1-3. Branched-structured polypropylene-based resin] in Embodiment 1. Therefore, the description applies here, and is not repeated.

The MFR of the branched polypropylene-based resin at 230°C in Embodiment 2 is identical with that described in the section [1-3. Branched-structured polypropylene-based resin] in Embodiment 1. Therefore, the description applies here, and is not repeated.

(Another resin and rubber)

The second resin mixture may further contain a rubber and/or a resin which is different from the branched polypropylene-based resin (hereinafter referred to also as "another resin"), provided that the advantages of Embodiment 2 of the present invention are not prevented from being brought about. Those other resin and rubber may be collectively referred to as "another resin or the like". Examples of the another resin include: (a) linear polypropylene-based resins, such as an ethylene/propylene random copolymer, an ethylene/propylene block copolymer, an ethylene/propylene alternating copolymer, and a propylene homopolymer; (b) ethylene-based resins such as high-density polyethylene, medium-density polyethylene, low-density polyethylene, linear low-density polyethylene, linear very-low-density polyethylene, an ethylene/vinyl acetate copolymer, an ethylene/acrylic acid copolymer, and an ethylene/methacrylic acid copolymer; and (c) styrenebased resins such as polystyrene, a styrene/maleic anhydride copolymer, and a styrene/ethylene copolymer. Examples of the rubber include olefin-based rubbers such as ethylene/propylene rubber, ethylene/butene rubber, ethylene/hexene rubber, and ethylene/octene rubber.

An amount of the another resin or the like contained in the second resin mixture is, for example, preferably not more than 60 parts by weight, more preferably not more than 40 parts by weight, and even more preferably not more than 20 parts by weight, with respect to 100 parts by weight of the second resin mixture. The lower limit of the amount of the another resin or the like contained is not particularly limited, and may be, for example, 0 parts by weight with respect to 100 parts by weight of the second resin mixture.

(Cell nucleating agent)

The second resin mixture may contain a cell nucleating agent for the purpose of controlling the number and shape of cells in the extruded expanded particles to be obtained. Examples of the cell nucleating agent include a sodium bicarbonate-citric acid mixture, monosodium citrate, talc, and calcium carbonate. As the cell nucleating agent, one type may be used solely or two or more types may be used in combination.

An amount of the cell nucleating agent used, i.e., an amount of the cell nucleating agent contained in the second resin mixture is not particularly limited. The amount of the cell nucleating agent is, for example, preferably 0.01 parts by weight to 5.00 parts by weight, more preferably 0.01 parts by weight to 3.50 parts by weight, even more preferably 0.01 parts by weight to 1.00 parts by weight, and particularly preferably 0.01 parts by weight to 0.50 parts by weight, with respect to 100 parts by weight of the branched polypropylene-based resin.

(Other components)

As necessary, the second resin mixture may further contain, as another component or other components, (a) a stabilizer(s) such as an antioxidant, a metal deactivator, a phosphorous processing stabilizer, an ultraviolet absorber, an ultraviolet stabilizer, a fluorescent brightening agent, metallic soap, and/or an antacid adsorbent and/or (b) an additive(s) such as a crosslinking agent, a chain transfer agent, a lubricant, a plasticizer, a filler, a reinforcer, a flame retardant, a coloring agent, and/or an antistatic agent. As the another component or the other components, one type may be used solely or two or more types may be used in combination.

(2-2-2. Composition)

In the second production method, a substance obtained by adding a blowing agent to the second resin mixture described above may be referred to as a "composition".

The blowing agent that can be used in the second production method is not particularly limited, provided that the blowing agent is a commonly used blowing agent that is used in extrusion expansion. Examples of the blowing agent include (a) physical-based blowing agents such as: (a-1) aliphatic hydrocarbons such as propane, normal butane, isobutane, normal pentane, isopentane, and hexane; (a-2) alicyclic hydrocarbons such as cyclopentane and cyclobutane; (a-3) ethers such as dimethyl ether, diethyl ether, and methyl ethyl ether; (a-4) fluorinated hydrocarbons such as difluoroethane; (a-5) alcohols such as methanol and ethanol; (a-6) inorganic gases such as air, nitrogen, and a carbonic acid gas; and (a-7) water, and (b) chemical-based blowing agents including thermolytic blowing agents such as sodium bicarbonate, azodicarbonamide, and dinitrosopentamethylenetetramine.

In the second production method, an inorganic gas is preferably used, and a carbonic acid gas is more preferably used as the blowing agent because a production cost is low and an environmental load is low. Moreover, in order to achieve a low production cost and a low environmental load, it is preferable that only a carbonic acid gas is used as the blowing agent, and that the blowing agent substantially does not contain, other than the carbonic acid gas, any blowing agents which are described above as examples of the blowing agent. Specifically, an amount of the blowing agent that is different from a carbonic acid gas among examples of the blowing agent described above and that is contained in the composition is preferably not more than 0.01 parts by weight, more preferably not more than 0.001 parts by weight, even more preferably not more than 0.0001 parts by weight, and particularly preferably 0 parts by weight, with respect to 100 parts by weight of the composition.

In the second production method, an amount of the blowing agent used only needs to be adjusted as appropriate depending on a kind of the blowing agent and a target expansion ratio of the expanded body. In the second production method, a total amount of the blowing agent used is preferably 1 part by weight to 20 parts by weight, more preferably 1 part by weight to 15 parts by weight, even more preferably 1 part by weight to 10 parts by weight, and particularly preferably 2 parts by weight to 10 parts by weight, with respect to 100 parts by weight of the composition. The "amount of the blowing agent used" can be referred to also as an "amount of the blowing agent contained in the composition".

(2-2-3. Third production device)

A third production device used in the second production method includes (i) a second melting and kneading section that includes a plurality of screws and (ii) a granulation section that includes a die. The third production device may further include a transportation section and/or a cooling section. In a case where the third production device includes a transportation section and a cooling section, (a) the second melting and kneading section, the transportation section, the cooling section, and the granulation section are linked to each other, and (b) the second melting and kneading section, the transportation section, the cooling section, and the granulation section are arranged in this order from the upstream side to the downstream side in an extruding direction of a composition. In a case where the third production device includes a transportation section and a cooling section, (a) the transportation section and the cooling section may be arranged in an alternating order between the upstream side and the downstream side, or (b) transportation sections may be provided on both the upstream side and the downstream side of the cooling section. The transportation section can be omitted, provided that a pressure of the composition in a tube from the second melting and kneading section to the granulation section is sufficiently low. In a case where a composition temperature is sufficiently decreased at an outlet of the second melting and kneading section, the cooling section can be omitted.

The second melting and kneading section that includes a plurality of screws is, for example, preferably a twin screw extruder having two screws because the twin screw extruder has good mixing properties. The second melting and kneading section also preferably has a screw configuration for preventing the blowing agent which has been injected into the second melting and kneading section from flowing back to the upstream side. That is, the second melting and kneading section that includes a plurality of screws is more preferably a twin screw extruder having two screw configurations with a backflow prevention function.

The transportation section is constituted by a transportation member for transporting a composition from the second melting and kneading section to the granulation section. The transportation member can be a known transportation member that is used in an extrusion expansion method. Examples of the transportation member include a gear pump. The gear pump is a member useful for maintaining a flow pressure of a composition or for increasing the pressure as appropriate.

The cooling section is constituted by a cooling member for cooling a composition which has been transported from the transportation section (or from the second melting and kneading section if the transportation section is omitted). The cooling member can be a known cooling member that is used in an extrusion expansion method. Examples of the cooling member include a single screw extruder, a static mixer, and the like. The composition is slowly cooled while being mixed by the single screw extruder or the static mixer at a low shear rate, and thus the composition is cooled to a predetermined temperature.

The die in the granulation section has at least one hole (referred to also as a discharge hole) for discharging a melted and kneaded material. A cross-sectional shape that is perpendicular to the extruding direction of the hole provided in the die (hereinafter sometimes simply referred to as a "shape of the hole in the die") is not particularly limited. In order to obtain extruded expanded particles having a spherical or substantially spherical shape, it is preferable that the shape of the hole in the die is a perfect circular shape, a substantially circular shape, an oval shape, a square shape, or the like. The number and diameter of holes provided in the die are not particularly limited. From the viewpoint of appropriately maintaining a size of expanded particles in the in-mold foam molding step, for example, the die preferably has a hole with a hole diameter of 0.1 mm to 2.0 mm, more preferably has a hole with a hole diameter of 0.4 mm to 1.5 mm. It is more preferable that the die have a plurality of (e.g., two or more) holes. Note that, in this specification, in a case where the shape of the hole in the die is not a perfect circular shape, the hole diameter of the hole in the die is intended to be a diameter of an inscribed circle of the shape of the hole in the die.

(2-2-4. Second melting and kneading step)

The second melting and kneading step is a step of melting a branched polypropylene-based resin and dissolving a blowing agent in the branched polypropylene-based resin in the second melting and kneading section of the third production device. The second melting and kneading step can be referred to also as a step of preparing a melted and kneaded material of a composition containing (i) the second resin mixture containing the branched polypropylene-based resin and (ii) the blowing agent.

In the second melting and kneading step, it is only necessary that the blowing agent be ultimately dissolved in the branched polypropylene-based resin. In the second melting and kneading step, the order and method of feeding the branched polypropylene-based resin and the blowing agent to the second melting and kneading section are not particularly limited, and can be, for example, the following method (d) or (e).

(d)(d-1) A composition is prepared by mixing or blending a branched polypropylene-based resin with a blowing agent; and (d-2) after that, the composition is fed to the second melting and kneading section and the composition is melted and kneaded.

(e)(e-1) A branched polypropylene-based resin is fed to the second melting and kneading section, and the branched polypropylene-based resin is melted and kneaded; and (e-2) after that, to the branched polypropylene-based resin which has been melted and kneaded, a blowing agent is fed through a raw material feed opening provided in the middle of the second melting and kneading section, that is, a composition is prepared (completed) in the second melting and kneading section and further the composition is melted and kneaded.

In a case where another resin, a cell nucleating agent, and another component or other components, which are used as necessary, are added to the composition in the above-described method (d) or (e), a method and an order of feeding these raw materials to the second melting and kneading section are not particularly limited. The another resin, the cell nucleating agent, and the another component or the other components, which are used as necessary, may be added simultaneously with the branched polypropylene-based resin and/or the blowing agent, or may be added separately and in random order. In a case where a blowing agent that is in the form of liquid at ordinary temperature (e.g., aliphatic hydrocarbons, alicyclic hydrocarbons, ethers, alcohols, and the like) is used as the blowing agent, the above-described method (d) or (e) can be used. In a case where a blowing agent that is in the form of gas at ordinary temperature (e.g.,

carbonic acid gas) is used as the blowing agent, the above-described method (e) can be used.

The second melting and kneading step may further include a step of, for example, after melting and kneading the composition by the above-described method (d) or (e), decreasing the temperature of the melted and kneaded composition within a temperature range in which the melted and kneaded composition does not solidify.

(2-2-5. Extrusion expansion step)

The extrusion expansion step is a step in which a composition obtained in the second melting and kneading step, i.e., a melted and kneaded composition is extruded through a die to a region having a pressure lower than an internal pressure of the third production device, and the extruded composition is chopped. Through the extrusion expansion step, extruded expanded particles are obtained. Therefore, the extrusion expansion step can be referred to also as a granulation step of granulating polypropylene-based resin extruded expanded particles.

In the extrusion expansion step, the region where the composition obtained in the second melting and kneading step is extruded is not particularly limited, provided that the pressure of the region is lower than the internal pressure of the third production device. For example, in the extrusion expansion step, the composition obtained in the second melting and kneading step may be extruded to a gas phase or may be extruded to a liquid phase.

The composition which has been extruded to the region having the pressure lower than the internal pressure of the third production device in the extrusion expansion step immediately begins to expand. In the extrusion expansion step, the composition which is expanding may be chopped, or the composition which has finished expanding may be chopped. In a case where the composition which is expanding is chopped, the chopped composition can complete expanding in the region where the composition is extruded.

Depending on the region where the composition obtained in the second melting and kneading step is extruded and the method of chopping the composition, the extrusion expansion step (granulation step) can be roughly classified into two types, i.e., a cold cutting method and a die face cutting method. The cold cutting method and the die face cutting method are the same as those described in the section (Second step) of Embodiment 1. Therefore, the description applies here, and is not repeated.

The following description will discuss a case in which, in the extrusion expansion step of Embodiment 2, the composition obtained in the second melting and kneading step is extruded in a liquid phase (e.g., UWC). The liquid phase is not particularly limited, and is preferably water because water can be inexpensively and safely produced. The temperature of the liquid phase is not particularly limited, and is preferably 20°C to 90°C, preferably 25°C to 85°C, more preferably 30°C to 80°C, even more preferably 35°C to 80°C, and particularly preferably 40°C to 80°C, because such a temperature makes it easy to obtain extruded expanded particles in which a smaller number of extruded expanded particles adhere to each other. In this specification, the temperature of the liquid phase can be measured by a thermometer which is set so as to be in contact with the liquid phase. In the region, the pressure of the liquid phase on the composition is not particularly limited, and is preferably 0.05 MPa·G to 0.60 MPa·G, more preferably 0.07 MPa·G to 0.55 MPa·G, more preferably 0.10 MPa·G to 0.50 MPa·G, even more preferably 0.10 MPa·G to 0.45 MPa·G, and particularly preferably 0.10 MPa·G to 0.40 MPa·G. Within these ranges, an open cell ratio of the extruded expanded particles to be obtained is easily kept low and the extruded expanded particles to be obtained are easily prevented from adhering to each other. In this specification, "MPa·G" intends that MPa indicates a gage pressure.

(2-2-6. Specific energy $E_2$)

In the second production method, specific energy $E_2$ is a value obtained by dividing electric power $P_2$ [kW] necessary for driving the plurality of screws of the second melting and kneading section (more specifically, electric power $P_2$ [kW] necessary for driving a motor that rotates the plurality of screws of the second melting and kneading section) by a discharge rate $Q_2$ [kg/h] of a composition. In this specification, the "electric power $P_2$ necessary for driving the plurality of screws of the second melting and kneading section" may be referred to as "necessary power $P_2$".

In the second production method, extruded expanded particles having excellent moldability can be obtained by setting the specific energy $E_2$ to be not more than 0.190 kWh/kg. The specific energy $E_2$ is more preferably not more than 0.180 kWh/kg, and particularly preferably not more than 0.170 kWh/kg. The lower limit of the specific energy $E_2$ is not particularly limited, and is preferably, for example, not less than 0.050 kWh/kg.

The specific energy $E_2$ can be adjusted to an intended range by selecting, as appropriate, a temperature of the second melting and kneading section, a temperature of the composition in the second melting and kneading section, a time of the second melting and kneading step, a screw rotational speed $N_2$ of the second melting and kneading section, a discharge rate $Q_2$ of the melted and kneaded composition, a ratio ($L_2/D_2$) between an effective length $L_2$ of the plurality of screws and an opening diameter $D_2$ in the second melting and kneading section, and the like. Note that the "opening diameter $D_2$" is an internal diameter of a cylinder which accommodates the plurality of screws.

The necessary power $P_2$ can be calculated from a motor capacity of the screws of the second melting and kneading section, a motor current value of the screws of the second melting and kneading section, the discharge rate $Q_2$ of the composition, the screw rotational speed $N_2$ of the second melting and kneading section, and the highest screw rotational speed of the second melting and kneading section. In calculation of the necessary power $P_2$, "motor torque" of the screws of the second melting and kneading section may be used instead of the "motor current value" of the screws of the second melting and kneading section.

The second production method (e.g., the second melting and kneading step) preferably further includes a specific energy $E_2$ adjustment step of adjusting the specific energy $E_2$ to be not more than 0.190 kWh/kg. The specific energy $E_2$ adjustment step is, for example, a step of adjusting at least one selected from the group consisting of the temperature of the second melting and kneading section, the temperature of the composition in the second melting and kneading section, the time of the second melting and kneading step, the screw rotational speed $N_2$ of the second melting and kneading section, the discharge rate $Q_2$ of the melted and kneaded composition, and the ratio ($L_2/D_2$) between the effective length $L_2$ of the plurality of screws and the opening diameter $D_2$ in the second melting and kneading section.

In the second melting and kneading step, the temperature of the second melting and kneading section is not particularly limited, and only needs to be a temperature at which the specific energy $E_2$ is not more than 0.190 kWh/kg. The temperature of the second melting and kneading section is preferably a temperature falling within a range that does not hinder the introduction of the blowing agent to the raw materials. In a case where the blowing agent is in the form of gas, if the branched polypropylene-based resin is not melted at a location of the second melting and kneading section at which the blowing agent is introduced, the blowing agent may flow to the upstream side of the second melting and kneading section. Therefore, it is preferable to set the barrel temperature such that the branched polypropylene-based resin is completely melted and the blowing agent is not gasified due to a high resin temperature. The temperature of the second melting and kneading section is preferably a temperature at which the branched polypropylene-based resin and the another resin can be melted, and is, for example, preferably a range of 170°C to 230°C, more preferably a range of 180°C to 220°C, and even more preferably a range of 180°C to 210°C. Examples of the temperature of the second melting and kneading section include a temperature of a cylinder (barrel) in which the screw is accommodated. It is preferable that the temperature of the second melting and kneading section falls within the above ranges, because the branched-structured polypropylene-based resin and the another resin are melted and are not thermally decomposed.

A temperature of the cooling section and a temperature of the die are not particularly limited, and may be set as appropriate depending on a melting point of the branched polypropylene-based resin, a type and an amount of the blowing agent used, an aspect of the extrusion expansion step, and the like. In a case where a single screw extruder is used as the cooling section, the temperature of the cooling section can be, for example, a temperature of a cylinder (barrel) in which the screw is accommodated in the single screw extruder.

The melting and kneading time is not particularly limited, and only needs to be a time taken for obtaining the specific energy $E_2$ of not more than 0.190 kWh/kg. The screw rotational speed $N_2$ of the second melting and kneading section is not particularly limited, and only needs to be the screw rotational speed $N_2$ that is necessary for obtaining the specific energy $E_2$ of not more than 0.190 kWh/kg. The screw rotational speed $N_2$ of the second melting and kneading section may be set, as appropriate, depending on a size of the second melting and kneading section (e.g., the ratio ($L_2/D_2$) between the effective length $L_2$ of the plurality of screws and the opening diameter $D_2$ in the second melting and kneading section), the discharge rate $Q_2$, and/or the like.

The discharge rate $Q_2$ of the melted and kneaded composition is not particularly limited, and only needs to be a discharge rate $Q_2$ necessary for obtaining the specific energy $E_2$ of not more than 0.190 kWh/kg. The discharge rate $Q_2$ of the melted and kneaded composition may be set, as appropriate, depending on a size of the second melting and kneading section (e.g., the ratio ($L_2/D_2$) between the effective length $L_2$ of the plurality of screws and the opening diameter $D_2$ in the second melting and kneading section), and/or the like.

The ratio ($L_2/D_2$) between the effective length $L_2$ of the plurality of screws and the opening diameter $D_2$ in the second melting and kneading section is a numerical value that serves as an index for kneading efficiency of the screw. As the value of $L_2/D_2$ becomes larger, a workload during melting and kneading increases, and consequently the specific energy $E_2$ increases. The valued of $L_2/D_2$ can be selected as appropriate, and can be, for example, approximately 20 to 45, more preferably approximately 25 to 35.

(2-3. Polypropylene-based resin extruded expanded particles)

In this specification, the "polypropylene-based resin extruded expanded particles obtained by the second production method" may also be referred to as "second extruded expanded particles".

(Moldability)

The second extruded expanded particles have the advantage of excellent moldability, and specifically, the advantage of a wide molding range (e.g., not less than 0.03 MPa).

In this specification, the "molding range of the polypropylene-based resin extruded expanded particles" is intended to mean a range of a steam pressure during in-mold foam molding in which range it is possible to obtain a polypropylene-based resin in-mold foamed molded product which satisfies the following when in-mold foam molding of the polypropylene-based resin extruded expanded particles is carried out: (x1) the polypropylene-based resin extruded expanded particles are sufficiently fused together; (x2) a gap between the polypropylene-based resin extruded expanded particles is sufficiently filled; (x3) the polypropylene-based resin in-mold foamed molded product has a beautiful surface; (x4) the polypropylene-based resin in-mold foamed molded product does not have a melting surface; (x5) the polypropylene-based resin in-mold foamed molded product has sufficient compressive strength; and (x6) the polypropylene-based resin in-mold foamed molded product does not shrink by not less than 5% with respect to the dimensions of the mold, and the shape of a mold used for in-mold foam molding is transferred to the polypropylene-based resin in-mold foamed molded product. In a case where a polypropylene-based resin in-mold foamed molded product adheres to a mold and cannot be taken out, it is determined that it is impossible to obtain a polypropylene-based resin in-mold foamed molded product. In this specification, for example, in a case where the steam pressure during in-mold foam molding, which steam pressure makes it possible to obtain a polypropylene-based resin in-mold foamed molded product which satisfies the above-described (x1) through (x6) when in-mold foam molding of the polypropylene-based resin extruded expanded particles is carried out, is P1 to P2, a value obtained by P2 - P1 is defined as the "molding range of the polypropylene-based resin extruded expanded particles". In this specification, "P1 to P2" is referred to also as "workable steam pressure range".

In a case where the steam pressure is excessively low for the polypropylene-based resin extruded expanded particles, the following polypropylene-based resin in-mold foamed molded product may be obtained: (a) the polypropylene-based resin extruded expanded particles are insufficiently fused together; (b) a gap between the polypropylene-based resin extruded expanded particles is not sufficiently filled; (c) the polypropylene-based resin in-mold foamed molded product has poor surface appearance; and/or (d) as a result of a shrinkage of the polypropylene-based resin in-mold foamed molded product, the shape of a mold used for in-mold foam molding is not transferred to the polypropylene-based resin in-mold foamed molded product. In a case where the steam pressure is excessively high for the polypropylene-based resin extruded expanded particles, the following polypropylene-based resin in-mold foamed molded product may be obtained: (a) the polypropylene-based resin in-mold foamed molded product has a melting surface and/or (b) the polypropylene-based resin in-mold foamed molded product has insufficient compressive strength.

The molding range of the second extruded expanded particles is not particularly limited. It is more preferable that the molding range of the second extruded expanded particles is as broad as possible. The molding range of the second extruded expanded particles is preferably not less than 0.03 MPa, and more preferably not less than 0.04 MPa. The extruded expanded particles having the molding range falling within the above range are excellent in moldability. The extruded expanded particles having the molding range falling within the above range can be particularly suitably used for in-mold foam molding using a mold having a complicated shape. This is because, in a case where extruded expanded particles having the molding range falling within the above range are used for in-mold foam molding using a mold having a complicated shape, steam is uniformly applied to the extruded expanded particles in the mold, and there is no possibility that the degree to which steam comes into contact with the extruded expanded particles differs. Thus, a part in which a steam pressure with respect to the extruded expanded particles is high and a part in which the steam pressure is low may not coexist in the mold having a complicated shape.

By molding the second extruded expanded particles (e.g., by in-mold foam molding), it is possible to obtain a foamed molded product which has excellent compressive strength, excellent fusibility, and/or a beautiful surface, without the need to strictly control the steam pressure.

(Shape)

The shape of the second extruded expanded particles is preferably, but not limited to, a spherical or substantially spherical shape, in view of a filling property of the extruded expanded particles with respect to the mold when molding the extruded expanded particles. For example, a foamed molded product may be intentionally produced in a manner so as to have gaps therein, in order to impart sound absorbency and/or permeability to the foamed molded product. In such cases, it is possible to utilize extruded expanded particles having a cylindrical shape, elliptical shape, rectangular parallelepiped shape, or a tube shape (straw shape).

(Diameter)

The following description will discuss a case where the shape of the second extruded expanded particles is a spherical or substantially spherical shape. In this case, an average diameter (also called average particle diameter) of the second extruded expanded particles is not particularly limited. In this case, the average diameter of the second extruded expanded particles is, for example, preferably 0.5 mm to 10.0 mm, more preferably 1.0 mm to 7.0 mm, and even more preferably 2.0 mm to 5.0 mm, in order to achieve excellent workability and moldability in molding extruded expanded particles. Here, the average diameter of the polypropylene-based resin extruded expanded particles refers to an arithmetic mean value of diameters of 20 arbitrarily selected polypropylene-based resin extruded expanded particles measured with use of a vernier caliper or the like. The average diameter of the second extruded expanded particles can be adjusted as appropriate by, for example, adjusting a hole diameter of a hole provided in the die.

(Open cell ratio)

It is more preferable that the open cell ratio of the second extruded expanded particles is as low as possible. The open cell ratio of the second extruded expanded particles is preferably not more than 15.0%, more preferably not more than 10.0%, even more preferably not more than 8.0%, and particularly preferably not more than 5.0%. The lower limit of the open cell ratio of the second extruded expanded particles is not particularly limited, and is, for example, not less than 0.0%. According to this feature, there are (a) the advantage that, during molding of extruded expanded particles, cells are hardly broken and shrunk, so that the extruded expanded particles have excellent moldability, and (b) the advantage that a foamed molded product obtained with use of the extruded expanded particles more exhibits characteristics such as capability of being formed in any shape, shock-absorbing properties, lightweight properties, compressive strength, and heat insulating properties.

In this specification, the open cell ratio of the polypropylene-based resin extruded expanded particles is a value measured in accordance with a method described in PROSEDURE C of ASTM D2856-87, with use of an air comparison pycnometer [Model 1000, available from Tokyo Science Co., Ltd.]. Specifically, the open cell ratio of the extruded expanded particles is calculated by sequentially carrying out the following steps (1) through (3): (1) a volume Vc ($cm^3$) of the extruded expanded particles is measured with use of an air comparison pycnometer; (2) next, the whole extruded expanded particles of which Vc had been measured are submerged in ethanol in a graduated cylinder; (3) then, an apparent volume Va ($cm^3$) of the extruded expanded particles is determined from how much a position of the ethanol in the graduated cylinder rose; (4) the open cell ratio of the extruded expanded particles is calculated based on the following expression:

$$\mathtt{Open\ cell\ ratio\ (\%)\ =\ ((Va\text{-}Vc)\ \times\ 100)\ /\ Va.}$$

This method of measuring the volume Va is referred to also as a submersion method.

(Expansion ratio)

The expansion ratio of the second extruded expanded particles is preferably 2 times to 45 times, more preferably 3 times to 40 times, even more preferably 3 times to 30 times, and particularly preferably 3 times to 25 times. According to this feature, there is the advantage that a polypropylene-based resin in-mold foamed molded product obtained with use of the extruded expanded particles more exhibits characteristics such as the capability of being formed in any shape, shock-absorbing properties, lightweight properties, and heat insulating properties. In a case where the expansion ratio of the extruded expanded particles obtained by the production of extruded expanded particles does not reach the above range, a method of increasing the expansion ratio by (i) pressurizing the insides of the obtained extruded expanded particles with use of an inert gas and then (ii) heating the extruded expanded particles (for example, a method disclosed in Japanese Patent Application Publication, Tokukaihei, No. 10-237212) can be also employed.

In this specification, the expansion ratio of the polypropylene-based resin extruded expanded particles is calculated by the following method: (1) a weight w (g) of the extruded expanded particles is measured; (2) next, the extruded expanded particles used to measure the weight are submerged in ethanol in a graduated cylinder, and a volume v ($cm^3$) of the extruded expanded particles is measured based on an increase in the liquid surface position in the graduated cylinder; (3) the weight w (g) is divided by the volume v ($cm^3$), and a density $\rho_1$ of the extruded expanded particles is calculated; (4) a density $\rho_2$ of a base resin is calculated by carrying out operations similar to the above (1) through (3) with use of the base resin instead of the extruded expanded particles; (5) the density $\rho_2$ of the base resin of the extruded expanded particles is divided by the density $\rho_1$ of the extruded expanded particles ($\rho_2/\rho_1$), and the obtained value is defined as the expansion ratio.

In this specification, the base resin can also be said a resin component which substantially constitutes extruded expanded particles. The density of the base resin of the extruded expanded particles is not substantially changed by an operation in which the extruded expanded particles are melted under reduced pressure to return to a lump of resin. Therefore, the density of the lump of resin obtained by melting the extruded expanded particles under reduced pressure can be considered as the density of the base resin of the extruded expanded particles. In this specification, the operation in which the extruded expanded particles are melted under reduced pressure to obtain a lump of resin may be referred to as "resin returning", and the lump of resin obtained by the resin returning may be referred to as a "returned resin".

Examples of a specific method of resin returning include, but are not particularly limited to, a method of sequentially carrying out the following steps (f1) through (f5): (f1) the expanded particles are introduced in a dryer which has been adjusted to have a temperature that is a melting point +10°C of a linear polypropylene-based resin; (f2) next, a pressure in the dryer is reduced to be -0.05 MPa (gage pressure) to -0.10 MPa (gage pressure) with use of a vacuum pump over 5 to 10 minutes; (f3) after that, the extruded expanded particles are left to stand for 30 minutes in the dryer, and a lump of resin (returned resin) is prepared; (f4) next, a temperature in the dryer is cooled to room temperature, and then the pressure in the dryer is returned to normal pressure; and (f5) after that, the lump of resin is taken out from the dryer.

(Crystallization peak)

Polypropylene-based resin extruded expanded particles obtained by the extrusion expansion method have the characteristic that a single crystallization peak is present in a DSC curve obtained by DSC. In other words, it is highly probable that polypropylene-based resin expanded particles having the characteristic that a single crystallization peak is present in a DSC curve obtained by DSC are those obtained by the extrusion expansion method. The second extruded expanded particles can also have the characteristic that a single crystallization peak is present in a DSC curve obtained by DSC.

The DSC curve of the polypropylene-based resin extruded expanded particles used in calculation of the crystallization peak is a curve obtained by DSC while 5 mg to 6 mg of the polypropylene-based resin extruded expanded particles are heated from 40°C to 220°C at a rate of 10°C / minute.

[2-4. Method for producing polypropylene-based resin foamed molded product]

The method for producing a polypropylene-based resin foamed molded product in accordance with Embodiment 2 of the present invention includes a heating step of filling a molding space, which is formed by at least two molds included in a mold, with polypropylene-based resin extruded expanded particles (i.e., second extruded expanded particles) obtained by the method described in the section [2-2. Method for producing polypropylene-based resin extruded expanded particles] or polypropylene-based resin extruded expanded particles (i.e., second extruded expanded particles) described in the section [2-3. Polypropylene-based resin extruded expanded particles], and then heating the polypropylene-based resin extruded expanded particles in the molding space.

In this specification, the "polypropylene-based resin foamed molded product in accordance with Embodiment 2 of the present invention" may be referred to as a "second foamed molded product".

The method for producing a polypropylene-based resin foamed molded product in accordance with Embodiment 2 of the present invention has the advantage that, even in a case where molding is carried out at a steam pressure that is higher or lower than a conventionally acceptable range, it is possible to provide a polypropylene-based resin in-mold foamed molded product which has excellent compressive strength, excellent fusibility, and/or a beautiful surface.

In the method for producing a polypropylene-based resin foamed molded product in accordance with Embodiment 2 of the present invention, it is preferable that the heating step includes a step of heating the polypropylene-based resin extruded expanded particles with steam.

Aspects other than the above-described matters in relation to the method for producing a polypropylene-based resin foamed molded product in Embodiment 2 are identical with those described in the section [1-6. Method for producing polypropylene-based resin foamed molded product] in Embodiment 1. Therefore, the description applies here, and is not repeated.

In another embodiment of the present invention, it is most preferable to employ a combination of Embodiment 1 and Embodiment 2. In other words, a branched polypropylene-based resin obtained by the first production method in Embodiment 1 may be used as a branched polypropylene-based resin used in the second production method in Embodiment 2.

That is, another embodiment of the present invention is a method for producing polypropylene-based resin extruded expanded particles, the method being carried out using a third production device including a second melting and kneading section that has a plurality of screws and a granulation section that has a die, the method including: a second melting and kneading step of melting and kneading, in the second melting and kneading section, a blowing agent and a branched-structured polypropylene-based resin obtained by the first production method; and an extrusion expansion step of discharging, through the die, a composition obtained in the second melting and kneading step to a region having a pressure lower than an internal pressure of the third production device, specific energy $E_2$ being not more than 0.190 kWh/kg, where the specific energy $E_2$ is a value obtained by dividing electric power $P_2$ that is necessary for driving the plurality of screws of the second melting and kneading section by a discharge rate $Q_2$ of the composition, and the branched-structured polypropylene-based resin being obtained by a production method below.

An embodiment of the present invention can be arranged as follows.

[X1] A method for producing a branched-structured polypropylene-based resin, the method being carried out using a first production device including a die and a first melting and kneading section which has a screw, the method including: a first melting and kneading step of melting and kneading a polypropylene-based resin, a conjugated diene compound, and a radical polymerization initiator in the first melting and kneading section; and a discharging step of discharging, through the die, a branched-structured polypropylene-based resin obtained in the first melting and kneading step, an amount of the conjugated diene compound used being 0.30 parts by weight to 1.50 parts by weight, with respect to 100 parts by weight of the polypropylene-based resin, an amount of the radical polymerization initiator used being 0.50 parts by weight to 2.00 parts by weight, with respect to 100 parts by weight of the polypropylene-based resin, and specific energy $E_1$ being not less than 0.35 kWh/kg, where the specific energy $E_1$ is a value obtained by dividing electric power $P_1$ that is necessary for driving the screw of the first melting and kneading section by a discharge rate $Q_1$ of the branched-structured polypropylene-based resin.

[X2] The method described in [X1], in which: the first melting and kneading section is a multiple-screw extruder.

[X3] The method described in [X1] or [X2], in which: the conjugated diene compound consists only of isoprene and/or butadiene.

[X4] The method described in any one of [X1] through [X3], in which: the radical polymerization initiator consists only of at least one kind selected from the group consisting of peroxy ketals, peroxy esters, and peroxy carbonates.

[X5] The method described in any one of [X1] through [X4], in which: a melt flow rate of the polypropylene-based resin at 230°C is 0.5 g/10 minutes to 20.0 g/10 minutes.

[X6] The method described in any one of [X1] through [X5], in which: a gel fraction of the branched-structured polypropylene-based resin is not more than 10.0% by weight.

[X7] The method described in any one of [X1] through [X6], in which: a temperature of the first melting and kneading section is 160°C to 300°C.

[X8] The method described in any one of [X1] through [X7], in which: a melting and kneading time in the first melting and kneading step is 30 seconds to 10 minutes.

[X9] The method described in any one of [X1] through [X8], in which: a ratio ($L_1/D_1$) between an effective length $L_1$ of the screw and an opening diameter $D_1$ in the first melting and kneading section is 30 to 75.

[X10] A method for producing polypropylene-based resin extruded expanded particles, the method including: a first step of melting and kneading (a) a branched-structured polypropylene-based resin which has been obtained by the method described in any one of [X1] through [X9] and (b) a blowing agent in a second production device; and a second step of discharging, through a die, a composition obtained in the first step to a region having a pressure lower than an internal pressure of the second production device.

[X11] A method for producing polypropylene-based resin extruded expanded particles, the method being carried out using a third production device including a second melting and kneading section that has a plurality of screws and a granulation section that has a die, the method including: a second melting and kneading step of melting and kneading, in the second melting and kneading section, a blowing agent and a branched-structured polypropylene-based resin which has been obtained by the method described in any one of [X1] through [X9]; and an extrusion expansion step of discharging, through the die, a composition obtained in the second melting and kneading step to a region having a pressure lower than an internal pressure of the third production device, specific energy $E_2$ being not more than 0.190 kWh/kg, where the specific energy $E_2$ is a value obtained by dividing electric power $P_2$ that is necessary for driving the plurality of screws of the second melting and kneading section by a discharge rate $Q_2$ of the composition.

[X12] A method for producing polypropylene-based resin extruded expanded particles, the method being carried out using a third production device including a second melting and kneading section that has a plurality of screws and a granulation section that has a die, the method including: a second melting and kneading step of melting and kneading, in the second melting and kneading section, a blowing agent and a branched-structured polypropylene-based resin; and an extrusion expansion step of discharging, through the die, a composition obtained in the second melting and kneading step to a region having a pressure lower than an internal pressure of the third production device, specific energy $E_2$ being not more than 0.190 kWh/kg, where the specific energy $E_2$ is a value obtained by dividing electric power $P_2$ that is necessary for driving the plurality of screws of the second melting and kneading section by a discharge rate $Q_2$ of the composition.

[X13] The method described in [X11] or [X12], in which: the third production device further includes a cooling section.

[X14] The method described in any one of [X11] through [X13], in which: the third production device further includes a transportation section.

[X15] The method described in any one of [X11] through [X14], in which: the die has a hole having a hole diameter of 0.1 mm to 2.0 mm.

[X16] The method described in any one of [X11] through [X15], in which: a melt flow rate of the branched-structured polypropylene-based resin at 230°C is 0.5 g/10 minutes to 20.0 g/10 minutes; and a melt tension of the branched-structured polypropylene-based resin at 200°C is not less than 8.0 cN.

[X17] The method described in any one of [X11] through [X16], in which: the blowing agent consists only of a carbonic acid gas.

[X18] The method described in any one of [X11] through [X17], in which: a ratio ($L_2/D_2$) between an effective length $L_2$ of the plurality of screws and an opening diameter $D_2$ in the second melting and kneading section is 20 to 45.

[X19] The method described in any one of [X11] through [X18], in which: an open cell ratio of the polypropylene-based resin extruded expanded particles is not more than 15.0%.

[X20] A method for producing a polypropylene-based resin foamed molded product, the method including: a heating step of filling a molding space, which is formed by at least two molds included in a mold, with polypropylene-based resin extruded expanded particles which has been obtained by the method described in any one of [X11] through [X19], and then heating the polypropylene-based resin extruded expanded particles in the molding space.

[X21] The method described in [X20], in which: the heating step includes a step of heating the polypropylene-based resin extruded expanded particles with steam; and a molding range in the heating step is not less than 0.03 MPa.

An embodiment of the present invention can be arranged as follows.

[Y1] A method for producing a branched-structured polypropylene-based resin, the method being carried out using a first production device including a die and a first melting and kneading section which has a screw, the method including: a first melting and kneading step of melting and kneading a polypropylene-based resin, a conjugated diene compound, and a radical polymerization initiator in the first melting and kneading section; and a discharging step of discharging, through the die, a branched-structured polypropylene-based resin obtained in the first melting and kneading step, an amount of the conjugated diene compound used being 0.30 parts by weight to 1.50 parts by weight, with respect to 100 parts by weight of the polypropylene-based resin, an amount of the radical polymerization initiator used being 0.50 parts by weight to 2.00 parts by weight, with respect to 100 parts by weight of the polypropylene-based resin, and specific energy $E_1$ being not less than 0.35 kWh/kg, where the specific energy $E_1$ is a value obtained by dividing electric power $P_1$ that is necessary for driving the screw of the first melting and kneading section by a discharge rate $Q_1$ of the branched-structured polypropylene-based resin.

[Y2] The method described in [Y1], in which: the first melting and kneading section is a multiple-screw extruder.

[Y3] A method for producing polypropylene-based resin extruded expanded particles, the method including: a first step of melting and kneading (a) a branched-structured polypropylene-based resin which has been obtained by the method described in [Y1] or [Y2] and (b) a blowing agent in a second production device; and a second step of discharging, through a die, a composition obtained in the first step to a region having a pressure lower than an internal pressure of the second production device.

[Y4] A method for producing a polypropylene-based resin foamed molded product, the method including: a heating step of filling a molding space, which is formed by at least two molds included in a mold, with polypropylene-based resin extruded expanded particles which has been obtained by the method described in [Y3], and then heating the polypropylene-based resin extruded expanded particles in the molding space.

An embodiment of the present invention can be arranged as follows.

[Z1] A method for producing polypropylene-based resin extruded expanded particles, the method being carried out using a third production device including a second melting and kneading section that has a plurality of screws and a granulation section that has a die, the method including: a second melting and kneading step of melting and kneading, in the second melting and kneading section, a blowing agent and a branched-structured polypropylene-based resin; and an extrusion expansion step of discharging, through the die, a composition obtained in the second melting and kneading step to a region having a pressure lower than an internal pressure of the third production device, specific energy $E_2$ being not more than 0.19 kWh/kg, where the specific energy $E_2$ is a value obtained by dividing electric power $P_2$ that is necessary for driving the plurality of screws of the second melting and kneading section by a discharge rate $Q_2$ of the composition.

[Z2] The method described in [Z1], in which: the third production device further includes a cooling section.

[Z3] The method described in [Z1] or [Z2], in which: the third production device further includes a transportation section.

[Z4] The method described in any one of [Z1] through [Z3], in which: the die has a hole having a hole diameter of 0.1 mm to 2.0 mm.

[Z5] The method described in any one of [Z1] through [Z4], in which: a melt flow rate of the branched-structured polypropylene-based resin at 230°C is 0.5 g/10 minutes to 20.0 g/10 minutes; and a melt tension of the branched-structured polypropylene-based resin at 200°C is not less than 8.0 cN.

[Z6] A method for producing a polypropylene-based resin foamed molded product, the method including: a heating step of filling a molding space, which is formed by at least two molds included in a mold, with polypropylene-based resin extruded expanded particles which has been obtained by the method described in any one of [Z1] through [Z5], and then heating the polypropylene-based resin extruded expanded particles in the molding space.

[Z7] The method described in [Z6], in which: the heating step includes a step of heating the polypropylene-based resin extruded expanded particles with steam; and a molding range in the heating step is not less than 0.03 MPa. Examples

[Example A]

Embodiment 1 of the present invention will be described below in more detail with reference to Examples A. Note, however, that the present invention is not limited to such Examples A.

(Raw materials)

As a polypropylene-based resin, F113G (product name) available from Prime Polymer Co., Ltd. (propylene homopolymer, MFR at 230°C of 3.0 g/10 minutes, melting point of 160°C) was used. As a conjugated diene compound, only isoprene was used. As a radical polymerization initiator, only t-butyl peroxy isopropylcarbonate was used.

[Example A-1]

As the first production device, a device including (i) a first melting and kneading section that has a screw and (ii) a die at the end in the extruding direction was used. As the first melting and kneading section, a twin screw extruder was used which included: (a) a co-rotating two screws in a cylinder having an opening diameter of $\varphi46$ mm; (b) a raw material feed opening (polypropylene-based resin feeder) at the upstream end in the extruding direction; and (c) in the middle of the cylinder, additional two raw material feed openings (a radical polymerization initiator feeding pump and a conjugated diene compound feeding pump). A ratio $L_1 / D_1$ between an effective length $L_1$ of the screws and the opening diameter $D_1$ in the first melting and kneading section was 30.7.

The polypropylene-based resin was fed via the polypropylene-based resin feeder to the twin screw extruder, and then 1.40 parts by weight of a radical polymerization initiator with respect to 100 parts by weight of the polypropylene-based resin was fed via the radical polymerization initiator feeding pump to the twin screw extruder. After that, with respect to the polypropylene-based resin and the radical polymerization initiator which had been melted and kneaded, 0.50 parts by weight of a conjugated diene compound with respect to 100 parts by weight of the polypropylene-based resin was fed to the twin screw extruder via the conjugated diene compound feeding pump, and thus a first resin mixture was prepared in the twin screw extruder. A feeding rate of the first resin mixture to the twin screw extruder was 50 kg/h. The feeding rate of the first resin mixture is intended to be an amount of the first resin mixture prepared in the twin screw extruder per unit time at a time point when the conjugated diene compound is fed to the twin screw extruder.

The prepared first resin mixture was melted and kneaded under conditions of a cylinder temperature of 200°C (i.e., a temperature of 200°C in the first melting and kneading section) and a screw rotational speed ($N_1$) of 258 rpm in the twin screw extruder, and thus a branched polypropylene-based resin was obtained (first melting and kneading step). The branched polypropylene-based resin thus obtained was discharged in a strand shape from the die at a discharge rate ($Q_1$) of 50 kg/h (discharging step). The discharged branched polypropylene-based resin (strand) was (a) cooled with water and then (b) chopped into pellets (cylindrical shape), and thus branched polypropylene-based resin pellets were obtained.

Electric power $P_1$ (necessary power $P_1$) necessary for driving a motor to rotate the screws of the twin screw extruder, which is the first melting and kneading section, was 20 kW, and specific energy $E_1$ was 0.40 kWh/kg. Table 1 shows production conditions and production results.

[Examples A-2 and A-3, Comparative Examples A-1 through A-5]

A branched polypropylene-based resin was obtained by a production method similar to that in Example A-1, except that the composition of the first resin mixture, the discharge rate $Q_1$, the screw rotational speed $N_1$, the electric power $P_1$, and the specific energy $E_1$ were altered as indicated in Table 1.

[Evaluation of branched-structured polypropylene-based resin]

For the branched polypropylene-based resins obtained in Examples A-1 through A-3 and Comparative Examples A-1 through A-5, (a) the melt tension, (b) the gel fraction, and (c) the MFR at 230°C were measured by the following methods, respectively. The results are shown in Table 1.

(a) Measurement of melt tension

The melt tension was measured with use of Capilograph 1D (available from Toyo Seiki Seisaku-sho, Ltd., Japan). Specifically, the melt tension was measured by the following steps (1) through (5): (1) a barrel which had a diameter of 9.55 mm and which had been heated to 200°C was filled with the branched polypropylene-based resin obtained in any of Examples A and Comparative Examples A; (2) next, the branched polypropylene-based resin was heated for 10 minutes in the barrel which had been heated to the test temperature (200°C); (3) subsequently, while the branched polypropylene-based resin was taken out in a strand shape from a capillary die (diameter: 1.0 mm, length: 10 mm) at a piston falling speed kept constant (10 mm/minute), this strand-like resin was caused to pass through a pulley which was for detecting a tension and which was located 350 mm below the capillary die, and then wind-up of the strand-like resin was started with use of a wind-up roll; (4) after take-off of the strand-like resin became stable, the wind-up speed of the strand-like resin was increased from an initial speed of 1.0 m/minute to a speed of 200 m/minute at a constant rate in 4 minutes; and (5) a load acting on the pulley, which was equipped with a load cell, at a time when the strand-like resin fractured was measured as the melt tension.

(b) Measurement of gel fraction

The gel fraction was measured with use of a gel fraction measuring device. Specifically, the following steps (1) through (10) were sequentially carried out. (1) 0.5 g of the branched polypropylene-based resin obtained in any of Examples A and Comparative Examples A was precisely weighed as a sample. (2) The sample was put in a metal gauze which had a bag shape, had a pleated side surface, and had a mesh size of 37 $\mu$m (400 mesh). (3) A stirrer piece and the metal gauze, in which the sample of (2) was placed, were put in an eggplant-shaped flask having a capacity of 300 mL, and 150 mL of p-xylene was further put in the eggplant-shaped flask. (4) Stirring of the solution was carried out in the eggplant-shaped flask at 130°C and 80 rpm for 1 hour with use of an oil bath device and a stirrer. (5) The p-xylene in the eggplant-shaped flask was completely replaced with new p-xylene, and then the solution in the eggplant-shaped flask was stirred for another 1 hour. (6) The p-xylene in the eggplant-shaped flask was completely replaced with new p-xylene, and then the solution in the eggplant-shaped flask was stirred for 4 hours. (7) The metal gauze was taken out from the eggplant-shaped flask with use of tweezers, and washed with p-xylene so that matters adhering to the side surface of the metal gauze were removed. (8) The residue (resin remaining undissolved) in the metal gauze was dried at 80°C for 8 hours in a vacuum dryer while the residue was in the metal gauze. (9) The residue was left to stand to cool down, and then a weight of the residue was measured in the state where the residue was in the 400-mesh metal gauze. (10) The gel fraction (% by weight) was calculated based on the following expression:

Gel fraction (% by weight) = weight of residue (g) / 0.5 (g) $\times$ 100.

Here, the weight of the residue in the metal gauze was obtained by subtracting a weight of only the metal gauze which has not been subjected to the filtration from a weight of the metal gauze which has been subjected to filtration and drying (including the residue).

(c) Measurement of MFR at 230°C

A value of MFR at 230°C was measured with use of an MFR measuring apparatus described in JIS K7210, while using the branched polypropylene-based resin obtained in any of Examples A and Comparative Examples A as a sample. Measurement conditions were as follows: a diameter of an orifice was 2.0959$\pm$0.0050 mm$\varphi$; a length of the orifice was 8.000$\pm$0.025 mm; a load was 2160 g; and a temperature was 230$\pm$0.2°C.

[Table 1]

| | | Example A-1 | Example A-2 | Example A-3 | Comparative Example A-1 | Comparative Example A-2 | Comparative Example A-3 | Comparative Example A-4 | Comparative Example A-5 |
|---|---|---|---|---|---|---|---|---|---|
| Composition of first resin mixture | Polypropylene resin [parts by mass] | 100 | 100 | 100 | 100 | 100 | 100 | 100 | 100 |
| | Conjugated diene compound [parts by mass] | 0.50 | 0.51 | 0.51 | 0.50 | 0.50 | 0.51 | 0.51 | 0.51 |
| | Radical polymerization initiator [parts by mass] | 1.40 | 1.40 | 1.40 | 1.40 | 1.40 | 1.40 | 1.40 | 1.40 |
| Discharge rate $Q_1$ [kg/h] | | 50 | 50 | 70 | 50 | 50 | 90 | 50 | 70 |
| Screw rotational speed $N_1$ [rpm] | | 258 | 258 | 361 | 164 | 184 | 332 | 164 | 230 |
| Necessary power $P_1$ [kW] | | 20 | 20 | 28 | 13 | 14.5 | 27 | 13 | 18.9 |
| Specific energy $E_1$ [kWh/kg] | | 0.40 | 0.40 | 0.40 | 0.26 | 0.29 | 0.30 | 0.26 | 0.27 |
| Branched polypropylene-based resin | Melt tension [mN] | 82 | 97 | 82 | 65 | 74 | 61 | 70 | 64 |
| | Gel fraction [% by mass] | 8.5 | 7.0 | 6.7 | 24.0 | 22.4 | 16.5 | 24.4 | 22.2 |
| | MFR [g/10 mim] | 2.5 | 2.8 | 3.9 | 2.8 | 2.6 | 5.2 | 3.0 | 3.9 |

The branched polypropylene-based resins of Examples A-1 through A-3 produced by the first production method exhibited the melt tension of greater than 8.0 cN (80 mN), and in particular, the branched polypropylene-based resin of Example A-2 exhibited the melt tension of greater than 9.5 cN (95 mN). In addition, the gel fractions of the branched polypropylene-based resins in Examples A-1 through A-3 produced by the first production method were all not more than 10.0% by weight. In contrast, the branched polypropylene-based resins of Comparative Examples A-1 through A-5 produced by the production method with the specific energy $E_1$ of less than 0.35 kWh/kg exhibited low melt tensions and high gel fractions.

[Example B]

Embodiment 2 of the present invention will be described below in more detail with reference to Examples B. Note, however, that the present invention is not limited to such Examples B.

(Measuring method and evaluating method)

[MFR at 230°C of branched polypropylene-based resin]

A method of measuring the MFR of the branched polypropylene-based resin at 230°C in Embodiment 2 was similar to that described in "(c) Measurement of MFR at 230°C" in [Example A] above, except that the branched polypropylene-based resin obtained in each of Examples B and Comparative Example B was used as a sample.

[Melting tension of branched polypropylene-based resin]

A method of measuring the melt tension of the branched polypropylene-based resin in Embodiment 2 was similar to that described in "(a) Measurement of melt tension" in [Example A] above, except that a barrel which had a diameter of 9.55 mm and which had been heated to 200°C was filled with the branched polypropylene-based resin obtained in each of Examples B and Comparative Example B.

[Expansion ratio]

The expansion ratio of the polypropylene-based resin extruded expanded particles was calculated by the following method: (1) a weight w (g) of the extruded expanded particles was measured; (2) next, the extruded expanded particles used to measure the weight were submerged in ethanol in a graduated cylinder, and a volume v ($cm^3$) of the extruded expanded particles was measured based on an increase in the liquid surface position in the graduated cylinder; (3) the weight w (g) was divided by the volume v ($cm^3$), and a density $\rho_1$ of the extruded expanded particles was calculated; (4) a density $\rho_2$ of a base resin (returned resin) was calculated by carrying out operations similar to the above (1) through (3) with use of the base resin instead of the extruded expanded particles; (5) the density $\rho_2$ of the base resin of the extruded expanded particles was divided by the density $\rho_1$ of the extruded expanded particles ($\rho_2/\rho_1$), and the obtained value was defined as the expansion ratio.

In Examples B and Comparative Example B, the density of the lump of resin obtained by resin returning of the extruded expanded particles was regarded as a density of the base resin. The following steps (f1) through (f5) were sequentially carried out, and the obtained lump of resin was used as a returned resin of the extruded expanded particles: (f1) the extruded expanded particles were introduced in a dryer in which a temperature was adjusted to 160°C; (f2) next, a pressure in the dryer was reduced to be -0.05 MPa (gage pressure) to -0.10 MPa (gage pressure) with use of a vacuum pump over 5 to 10 minutes; (f3) after that, the extruded expanded particles were left to stand for 30 minutes in the dryer, and a lump of resin (returned resin) was prepared; (f4) next, a temperature in the dryer was cooled to room temperature, and then the pressure in the dryer was returned to normal pressure; and (f5) after that, the lump of resin was taken out from the dryer.

[Open cell ratio]

The open cell ratio of the extruded expanded particles was measured in accordance with a method described in PROSEDURE C of ASTM D2856-87, with use of an air comparison pycnometer [Model 1000, available from Tokyo Science Co., Ltd.]. Specifically, the open cell ratio of the extruded expanded particles was calculated by sequentially carrying out the following steps (1) through (3): (1) a volume Vc ($cm^3$) of the extruded expanded particles was measured with use of an air comparison pycnometer; (2) next, the whole extruded expanded particles of which Vc had been measured was submerged in ethanol in a graduated cylinder; (3) then, the apparent volume Va ($cm^3$) of the extruded expanded particles was determined from how much a position of the ethanol in the graduated cylinder rose; and (4) the open cell ratio of the extruded expanded particles was calculated based on the following expression:

$$\mathrm{Open\ cell\ ratio\ (\%)\ =\ ((Va\text{-}Vc)\ \times\ 100)\ /\ Va.}$$

[Molding range]

In the in-mold foam molding, the polypropylene-based resin extruded expanded particles were subjected to in-mold foam molding to obtain a polypropylene-based resin in-mold foamed molded product, while the steam pressure was varied by 0.02 MPa within a predetermined range. In so doing, a range of the steam pressure during the in-mold foam molding, in which range it was possible to obtain a polypropylene-based resin in-mold foamed molded product which satisfied the following conditions, was determined: (x1) the polypropylene-based resin extruded expanded particles were sufficiently fused together; (x2) a gap between the polypropylene-based resin extruded expanded particles was sufficiently filled; (x3) a surface thereof was beautiful; (x4) a surface thereof was not melted; (x5) the compressive strength was sufficient; and (x6) the shape of the mold used for the in-mold foam molding was transferred thereto without shrinkage.

Note that, for each of the items (x1) through (x6) in measuring the molding range, it is only necessary to set an arbitrary standard as appropriate that is fixed among Examples B and Comparative Example B.

In a case where a range of the steam pressure obtained by the above-described method is P1 to P2, the range "P1 to P2" was defined as a "workable steam pressure range", and the "value" obtained by P2 - P1 was defined as a "molding range of the polypropylene-based resin extruded expanded particles". The "workable steam pressure range" and the "molding range of the polypropylene-based resin extruded expanded particles" were indicated in the columns "steam pressure range" and "molding range", respectively, in Table 2.

(First production device)

In a production example B described below, as the first production device used to produce a branched-structured polypropylene-based resin, a device including (i) a first melting and kneading section that has a screw and (ii) a die at the end in the extruding direction was used. As the first melting and kneading section, a twin screw extruder was used which included: (a) a co-rotating two screws in a cylinder having an opening diameter of $\varphi$46 mm; (b) a raw material feed opening (polypropylene-based resin feeder) at the upstream end in the extruding direction; and (c) in the middle of the cylinder, additional two raw material feed openings (a radical polymerization initiator feeding pump and a conjugated diene compound feeding pump). A ratio $L_1/D_1$ between an effective length $L_1$ of the screws and the opening diameter $D_1$ in the first melting and kneading section was 30.7.

(Third production device)

In Examples B and Comparative Example B described below, a device in which a second melting and kneading section, a cooling section, a transportation section, a diverter valve, and a granulation section were coupled in series was used as a third production device used to produce polypropylene-based resin extruded expanded particles. As the second melting and kneading section, a twin screw extruder was used which included two screws, a raw material feeding section at one end, and a blowing agent feeding section in the middle of the screws. In the second melting and kneading section, an opening diameter D of the screw was 26 mm, and a ratio (L/D) between an effective length L of the screw and the opening diameter D was 40.6. As the cooling section, a static mixer was used. The granulation section included a die having six holes with a hole diameter of 0.8 mm.

(Production Example B)

(Production of branched-structured polypropylene-based resin)

A branched polypropylene-based resin was produced by sequentially carrying out the following steps (1) through (5):

(1) 100 parts by weight of a random polypropylene resin (F-724NPC, available from Prime Polymer Co., Ltd.) and 1.33 parts by weight of a mixture of t-butyl peroxyisopropylmonocarbonate and 2,2-di(t-butyl peroxy)butane as a radical polymerization initiator were fed, at 70 kg/h, to the twin screw extruder (having two co-rotating screws with a screw diameter of $\varphi$ of 46 mm) (first melting and kneading section) included in the first production device; (2) from an injection part provided in the middle of the twin screw extruder, 0.55 parts by weight of isoprene, with respect to 100 parts by weight of the random polypropylene resin, was fed as a conjugated diene-based compound; (3) the mixture thus obtained in the twin screw extruder was melted and kneaded under conditions of a cylinder temperature of 200°C (i.e., a temperature of 200°C in the first melting and kneading section) and a screw rotational speed ($N_1$) of 258 rpm, and thus a melted and kneaded material (branched polypropylene-based resin) was obtained (first melting and kneading step); (4) the melted and kneaded material (branched polypropylene-based resin) thus obtained was extruded (discharged) at a discharge rate ($Q_1$) of 70 kg/h through the die provided at the end of the twin screw extruder (discharging step), and the melted and kneaded material (strand) thus extruded was cooled in a water tank; and (5) the strand was chopped with use of a pelletizer, provided subsequently to the water tank, to obtain a branched polypropylene-based resin in the form of pellets. The branched polypropylene-based resin thus obtained had an MFR at 230°C of 3.8 g/10 minutes and a melt tension of 10.6 cN. Here, a blending ratio of the radical polymerization initiators (i.e., t-butyl peroxyisopropylmonocarbonate:2,2-di(t-butyl peroxy)butane) in the mixture of radical polymerization initiators was 1:2. Electric power $P_1$ (necessary power $P_1$) necessary for driving a motor to rotate the screws of the twin screw extruder, which is the first melting and kneading section, was 27 kW, and the specific energy $E_1$ was 0.39 kWh/kg.

As described above, it can be said that the method for producing a branched-structured polypropylene-based resin in Examples B is an example of the method for producing a branched-structured polypropylene-based resin in Embodiment 1. That is, it can be said that Embodiment 1 was carried out in Examples B.

(Preparation of polypropylene-based resin having no branched structure)

A mixture of 60% by weight of a random polypropylene resin (available from Borealis, product name: RD734MO) and 40% by weight of carbon black was prepared. The obtained mixture was used as a polypropylene-based resin having no branched structure (i.e., as a linear polypropylene-based resin) in Examples and Comparative Example below.
In Examples B and Comparative Example B below, talc was used as a cell nucleating agent.

(Example B-1)

(Second melting and kneading step)

A second resin mixture was prepared by blending 95.55 parts by weight of the branched-structured polypropylene resin (branched polypropylene-based resin), 4.25 parts by weight of the polypropylene-based resin having no branched structure (linear polypropylene-based resin), and 0.2 parts by weight of talc as the cell nucleating agent. Subsequently, the second resin mixture was fed via the raw material feeding section to the twin screw extruder (second melting and kneading section), and melting and kneading of the second resin mixture was initiated at a cylinder temperature of 210°C (i.e., a temperature of 210°C in the first melting and kneading section) and a screw rotational speed ($N_2$) of 120 rpm. A feeding rate of the second resin mixture to the twin screw extruder was 10 kg/h. In the course of melting and kneading of the second resin mixture, only a carbonic acid gas was injected into the twin screw extruder through the blowing agent feeding section as a blowing agent, and the obtained composition was further melted and kneaded. A feeding rate of the blowing agent to the twin screw extruder was 0.25 kg/h.

(Extrusion expansion step)

The melted and kneaded composition which had been obtained through the second melting and kneading step was caused to pass through the die provided in the granulation section, and was discharged at a discharge rate ($Q_2$) of 10.25 kg/h to a region which was filled with water as a liquid phase at a pressure lower than an internal pressure of the third production device. Electric power $P_2$ (necessary power $P_2$) necessary for driving a motor to rotate the two screws of the twin screw extruder, which was the second melting and kneading section, was 1.435 kW, and the specific energy $E_2$ was 0.140 kWh/kg. In the region, the pressure of water on the composition was 0.2 MPa. The extruded composition was chopped with a cutter in the region filled with the water (liquid phase) to obtain polypropylene-based resin extruded expanded particles having a spherical or substantially spherical shape. The obtained polypropylene-based resin extruded expanded particles were collected by being subjected to a centrifugal dehydrator. Table 2 shows production conditions and production results.
The polypropylene-based resin extruded expanded particles thus obtained were evaluated in terms of expansion ratio, open cell ratio, and moldability by the above-described methods. As a result, the open cell ratio was 3.3%, and the other physical properties were as shown in Table 2.

(In-mold foam molding)

In-mold foam molding was carried out with use of the obtained polypropylene-based resin extruded expanded particles, and with use of a polyolefin foam molding machine available from Teubert Maschinenbau GmbH and a blockshaped mold (molding space: length × width × thickness: 381 mm × 381 mm × 60 mm). Specifically, the in-mold foam molding was carried out as follows: (1) a gap between molds (hereinafter referred to as a cracking) was taken by 18 mm (cracking ratio: 30%), and a molding space of the mold was filled with the polypropylene-based resin extruded expanded particles; (2) then, the mold was completely closed (i.e., the thickness of the molding space was 60 mm), and thus the extruded expanded particles were compressed; (3) next, air in the molding space of the mold was expelled by steam at 0.15 MPa (gage pressure); and (4) after that, the polypropylene-based resin extruded expanded particles were autoclave-molded for 5 seconds with use of steam having given pressure, and a polypropylene-based resin in-mold foamed molded product was thus obtained. At that time, the foamed molded product (in-mold foamed molded product) was prepared by increasing the pressure of the steam from 0.20 MPa (gage pressure) in increments of 0.02 MPa. The pressure of the steam was increased up to 0.30 MPa (gage pressure). For the in-mold foamed molded product thus obtained, the molding range described above was evaluated. The production results are shown in Table 2.

(Example B-2)

Polypropylene-based resin extruded expanded particles and an in-mold foamed molded product were obtained by production methods similar to those in Example B-1, except that the screw rotational speed $N_2$, the blowing agent feeding rate, the necessary power $P_2$, and the specific energy $E_2$ were altered as indicated in Table 2. The polypropylene-based resin extruded expanded particles and the in-mold foamed molded product thus obtained were evaluated in terms of expansion ratio, open cell ratio, and molding range by the above-described methods. As a result, the open cell ratio was 3.6%, and the other physical properties were as shown in Table 2.

(Example B-3)

Polypropylene-based resin extruded expanded particles and an in-mold foamed molded product were obtained by production methods similar to those in Example B-1, except that the screw rotational speed $N_2$, the blowing agent feeding rate, the necessary power $P_2$, and the specific energy $E_2$ were altered as indicated in Table 2. The polypropylene-based resin extruded expanded particles and the in-mold foamed molded product thus obtained were evaluated in terms of expansion ratio, open cell ratio, and molding range by the above-described methods. As a result, the open cell ratio was 3.8%, and the other physical properties were as shown in Table 2.

(Example B-4)

Polypropylene-based resin extruded expanded particles and an in-mold foamed molded product were obtained by production methods similar to those in Example B-1, except that the screw rotational speed $N_2$, the blowing agent feeding rate, the necessary power $P_2$, and the specific energy $E_2$ were altered as indicated in Table 2. The polypropylene-based resin extruded expanded particles and the in-mold foamed molded product thus obtained were evaluated in terms of expansion ratio, open cell ratio, and molding range by the above-described methods. As a result, the open cell ratio was 4.8%, and the other physical properties were as shown in Table 2.

(Comparative Example B-1)

Polypropylene-based resin extruded expanded particles and an in-mold foamed molded product were obtained by production methods similar to those in Example B-1, except that the screw rotational speed $N_2$, the discharge rate $Q_2$, the blowing agent feeding rate, the necessary power $P_2$, and the specific energy $E_2$ were altered as indicated in Table 2. The polypropylene-based resin extruded expanded particles and the in-mold foamed molded product thus obtained were evaluated in terms of expansion ratio, open cell ratio, and molding range by the above-described methods. As a result, the open cell ratio was 9.8%, and the other physical properties were as shown in Table 2.

[Table 2]

| | | | Example B-1 | Example B-2 | Example B-3 | Example B-4 | Comparative Example B-1 |
|---|---|---|---|---|---|---|---|
| Composition of second resin mixture | Polypropylene-based resin having branched structure | [parts by weight] | 95.55 | 95.55 | 95.55 | 95.55 | 95.55 |
| | Polypropylene-based resin having no branched structure | [parts by weight] | 4.25 | 4.25 | 4.25 | 4.25 | 4.25 |
| | Cell nucleating agent | [parts by weight] | 0.2 | 0.2 | 0.2 | 0.2 | 0.2 |
| Production condition for extruded expanded particles | Feeding rate of second resin mixture | [kg/h] | 10 | 10 | 10 | 10 | 10 |
| | Feeding rate of blowing agent | [kg/h] | 0.25 | 0.25 | 0.25 | 0.25 | 0.30 |
| | Discharge rate $Q_2$ | [kg/h] | 10.25 | 10.25 | 10.25 | 10.25 | 10.30 |
| | Screw rotational speed $N_2$ of second melting and kneading section | [rpm] | 120 | 170 | 94 | 80 | 220 |
| Production result of extruded expanded particles | Necessary power $P_2$ | [kW] | 1.44 | 1.74 | 1.16 | 1.11 | 2.16 |
| | Specific energy $E_2$ | [kWh/kg] | 0.140 | 0.170 | 0.113 | 0.108 | 0.210 |
| | Expansion ratio | % | 5.8 | 4.6 | 4.6 | 4.6 | 5.6 |
| | Open cell ratio | % | 3.3 | 3.6 | 3.8 | 4.8 | 9.8 |
| Production result of in-mold foamed molded product | Steam pressure range | [MPa·G] | 0.24-0.28 | 0.24-0.28 | 0.24-0.28 | 0.24-0.28 | 0.26-0.28 |
| | Molding range | [MPa] | 0.04 | 0.04 | 0.04 | 0.04 | 0.02 |

As shown in Table 2, the polypropylene-based resin extruded expanded particles of Examples B-1 and B-2 produced by the second production method had the molding range of no less than 0.04 MPa. Therefore, it has been found that, according to the second production method, it is possible to provide polypropylene-based resin extruded expanded particles that have excellent moldability, i.e., that can be subjected to in-mold foam molding at a wide range of steam pressure. In contrast, the polypropylene-based resin extruded expanded particles of Comparative Example B-1 produced by the production method with the specific energy $E_2$ of greater than 0.190 kWh/kg had inferior moldability, specifically, the molding range was narrower, and strict control of the steam pressure was necessary for in-mold foam molding, as compared with Examples B-1 and B-2.

Industrial Applicability

According to Embodiment 1 of the present invention, it is possible to provide a novel branched polypropylene-based resin having an improved melt tension. Therefore, Embodiment 1 of the present invention can be suitably used to obtain polypropylene-based resin extruded expanded particles having excellent moldability. According to Embodiment 2 of the present invention, it is possible to provide polypropylene-based resin extruded expanded particles having excellent moldability. Therefore, Embodiment 2 of the present invention can be suitably used to obtain a polypropylene-based resin in-mold foamed molded product which has good physical properties in terms of capability of being formed in any shape, shock-absorbing properties, lightweight properties, compressive strength, heat insulating properties, and the like. Therefore, Embodiment 1 and Embodiment 2 of the present invention can each be suitably used in the fields of automotive interior materials, shock-absorbing materials, packaging materials, heat insulating materials, and the like.

**Claims**

1. A method for producing a branched-structured polypropylene-based resin,

   said method being carried out using a first production device including a die and a first melting and kneading section which has a screw,
   said method comprising:

   a first melting and kneading step of melting and kneading a polypropylene-based resin, a conjugated diene compound, and a radical polymerization initiator in the first melting and kneading section; and
   a discharging step of discharging, through the die, a branched-structured polypropylene-based resin obtained in the first melting and kneading step,
   an amount of the conjugated diene compound used being 0.30 parts by weight to 1.50 parts by weight, with respect to 100 parts by weight of the polypropylene-based resin,
   an amount of the radical polymerization initiator used being 0.50 parts by weight to 2.00 parts by weight, with respect to 100 parts by weight of the polypropylene-based resin, and
   specific energy $E_1$ being not less than 0.35 kWh/kg,
   where the specific energy $E_1$ is a value obtained by dividing electric power $P_1$ that is necessary for driving the screw of the first melting and kneading section by a discharge rate $Q_1$ of the branched-structured polypropylene-based resin.

2. The method as set forth in claim 1, wherein:
   the first melting and kneading section is a multiple-screw extruder.

3. The method as set forth in claim 1 or 2, wherein:
   the conjugated diene compound consists only of isoprene and/or butadiene.

4. The method as set forth in any one of claims 1 through 3, wherein:
   the radical polymerization initiator consists only of at least one kind selected from the group consisting of peroxy ketals, peroxy esters, and peroxy carbonates.

5. The method as set forth in any one of claims 1 through 4, wherein:
   a melt flow rate of the polypropylene-based resin at 230°C is 0.5 g/10 minutes to 20.0 g/10 minutes.

6. A method for producing polypropylene-based resin extruded expanded particles, said method comprising:

   a first step of melting and kneading (a) a branched-structured polypropylene-based resin which has been obtained by a method recited in any one of claims 1 through 5 and (b) a blowing agent in a second production device; and
   a second step of discharging, through a die, a composition obtained in the first step to a region having a pressure lower than an internal pressure of the second production device.

7. A method for producing polypropylene-based resin extruded expanded particles,

   said method being carried out using a third production device including a second melting and kneading section that has a plurality of screws and a granulation section that has a die,
   said method comprising:

   a second melting and kneading step of melting and kneading, in the second melting and kneading section, a blowing agent and a branched-structured polypropylene-based resin which has been obtained by a method recited in any one of claims 1 through 5; and

an extrusion expansion step of discharging, through the die, a composition obtained in the second melting and kneading step to a region having a pressure lower than an internal pressure of the third production device,

specific energy $E_2$ being not more than 0.190 kWh/kg,

where the specific energy $E_2$ is a value obtained by dividing electric power $P_2$ that is necessary for driving the plurality of screws of the second melting and kneading section by a discharge rate $Q_2$ of the composition.

8. A method for producing polypropylene-based resin extruded expanded particles,

said method being carried out using a third production device including a second melting and kneading section that has a plurality of screws and a granulation section that has a die,
said method comprising:

a second melting and kneading step of melting and kneading, in the second melting and kneading section, a blowing agent and a branched-structured polypropylene-based resin; and
an extrusion expansion step of discharging, through the die, a composition obtained in the second melting and kneading step to a region having a pressure lower than an internal pressure of the third production device,

specific energy $E_2$ being not more than 0.190 kWh/kg,

where the specific energy $E_2$ is a value obtained by dividing electric power $P_2$ that is necessary for driving the plurality of screws of the second melting and kneading section by a discharge rate $Q_2$ of the composition.

9. The method as set forth in claim 7 or 8, wherein:
the third production device further includes a cooling section.

10. The method as set forth in any one of claims 7 through 9, wherein:
the third production device further includes a transportation section.

11. The method as set forth in any one of claims 7 through 10, wherein:
the die has a hole having a hole diameter of 0.1 mm to 2.0 mm.

12. The method as set forth in any one of claims 7 through 11, wherein:

a melt flow rate of the branched-structured polypropylene-based resin at 230°C is 0.5 g/10 minutes to 20.0 g/10 minutes; and
a melt tension of the branched-structured polypropylene-based resin at 200°C is not less than 8.0 cN.

13. The method as set forth in any one of claims 7 through 12, wherein:
the blowing agent consists only of a carbonic acid gas.

14. A method for producing a polypropylene-based resin foamed molded product, said method comprising:
a heating step of filling a molding space, which is formed by at least two molds included in a mold, with polypropylene-based resin extruded expanded particles which has been obtained by a method recited in any one of claims 7 through 13, and then heating the polypropylene-based resin extruded expanded particles in the molding space.

15. The method as set forth in claim 14, wherein:

the heating step includes a step of heating the polypropylene-based resin extruded expanded particles with steam; and
a molding range in the heating step is not less than 0.03 MPa.

**Patentansprüche**

1. Ein Verfahren zur Herstellung eines polypropylenbasierten Harzes mit verzweigter Struktur, wobei das Verfahren unter Verwendung einer ersten Produktionsvorrichtung, die eine Düse und einen ersten Schmelz- und Knetabschnitt, der eine Schnecke aufweist, beinhaltet, durchgeführt wird,
wobei das Verfahren umfasst:

einen ersten Schmelz- und Knetschritt des Schmelzens und Knetens eines polypropylenbasierten Harzes, einer konjugierten Dienverbindung und eines radikalischen Polymerisationsinitiators in dem ersten Schmelz- und Knetabschnitt; und
einen Austragsschritt des Austragens eines polypropylenbasierten Harzes mit verzweigter Struktur, das in dem ersten Schmelz- und Knetschritt erhalten wurde, durch die Düse,
wobei eine Menge der verwendeten konjugierten Dienverbindung 0,30 Gewichtsteile bis 1,50 Gewichtsteile, bezogen auf 100 Gewichtsteile des polypropylenbasierten Harzes, beträgt,
wobei eine Menge des verwendeten radikalischen Polymerisationsinitiators 0,50 Gewichtsteile bis 2,00 Gewichtsteile, bezogen auf 100 Gewichtsteile des polypropylenbasierten Harzes, beträgt und
die spezifische Energie $E_1$ nicht weniger als 0,35 kWh/kg beträgt,
wobei die spezifische Energie $E_1$ ein Wert ist, der durch Dividieren der elektrischen Leistung $P_1$, die zum Antreiben der Schnecke des ersten Schmelz- und Knetabschnitts erforderlich ist, durch eine Austragsrate $Q_1$ des polypropylenbasierten Harzes mit verzweigter Struktur erhalten wird.

2. Das Verfahren nach Anspruch 1, wobei:
der erste Schmelz- und Knetabschnitt ein Mehrschneckenextruder ist.

3. Das Verfahren nach Anspruch 1 oder 2, wobei:
die konjugierte Dienverbindung nur aus Isopren und/oder Butadien besteht.

4. Das Verfahren nach einem der Ansprüche 1 bis 3, wobei:
der radikalische Polymerisationsinitiator nur aus mindestens einer Art, ausgewählt aus der Gruppe bestehend aus Peroxyketalen, Peroxyestern und Peroxycarbonaten, besteht.

5. Das Verfahren nach einem der Ansprüche 1 bis 4, wobei:
eine Schmelzflussrate des polypropylenbasierten Harzes bei 230°C 0,5 g/10 Minuten bis 20,0 g/10 Minuten beträgt.

6. Ein Verfahren zur Herstellung von extrudierten expandierten polypropylenbasierten Harzpartikeln, wobei das Verfahren umfasst:

einen ersten Schritt des Schmelzens und Knetens (a) eines polypropylenbasierten Harzes mit verzweigter Struktur, das durch ein Verfahren nach einem der Ansprüche 1 bis 5 erhalten wurde, und (b) eines Treibmittels in einer zweiten Produktionsvorrichtung; und
einen zweiten Schritt des Austragens einer in dem ersten Schritt erhaltenen Zusammensetzung durch eine Düse in einen Bereich, der einen Druck aufweist, welcher niedriger als ein Innendruck der zweiten Produktionsvorrichtung ist.

7. Ein Verfahren zur Herstellung von extrudierten expandierten polypropylenbasierten Harzpartikeln,

wobei das Verfahren unter Verwendung einer dritten Produktionsvorrichtung durchgeführt wird, die einen zweiten Schmelz- und Knetabschnitt, welcher eine Mehrzahl von Schnecken aufweist, und einen Granulierabschnitt, welcher eine Düse aufweist, beinhaltet,
wobei das Verfahren umfasst:

einen zweiten Schmelz- und Knetschritt des Schmelzens und Knetens eines Treibmittels und eines polypropylenbasierten Harzes mit verzweigter Struktur, das durch ein Verfahren nach einem der Ansprüche 1 bis 5 erhalten wurde, in dem zweiten Schmelz- und Knetabschnitt; und
einen Extrusions-Expansionsschritt des Austragens einer in dem zweiten Schmelz- und Knetschritt erhaltenen Zusammensetzung durch die Düse in einen Bereich mit einem Druck, der niedriger als ein Innendruck der dritten Produktionsvorrichtung ist,
wobei die spezifische Energie $E_2$ nicht mehr als 0,190 kWh/kg beträgt,
wobei die spezifische Energie $E_2$ ein Wert ist, der durch Dividieren der zum Antrieb der Mehrzahl von Schnecken des zweiten Schmelz- und Knetabschnitts erforderlichen elektrischen Leistung $P_2$ durch die Austragsrate $Q_2$ der Zusammensetzung erhalten wird.

8. Ein Verfahren zur Herstellung von extrudierten expandierten polypropylenbasierten Harzpartikeln,

   wobei das Verfahren unter Verwendung einer dritten Produktionsvorrichtung durchgeführt wird, die einen zweiten Schmelz- und Knetabschnitt, welcher eine Mehrzahl von Schnecken aufweist, und einen Granulierabschnitt, welcher eine Düse aufweist, beinhaltet,
   wobei das Verfahren umfasst:

   einen zweiten Schmelz- und Knetschritt des Schmelzens und Knetens eines Treibmittels und eines polypropylenbasierten Harzes mit verzweigter Struktur in dem zweiten Schmelz- und Knetabschnitt; und
   einen Extrusions-Expansionsschritt des Austrags einer in dem zweiten Schmelz- und Knetschritt erhaltenen Zusammensetzung durch die Düse in einen Bereich mit einem Druck, der niedriger als ein Innendruck der dritten Produktionsvorrichtung ist, wobei
   die spezifische Energie $E_2$ nicht mehr als 0,190 kWh/kg beträgt,
   wobei die spezifische Energie $E_2$ ein Wert ist, der durch Dividieren der elektrischen Leistung $P_2$, die zum Antrieb der Mehrzahl von Schnecken des zweiten Schmelz- und Knetabschnitts erforderlich ist, durch eine Austragsrate $Q_2$ der Zusammensetzung erhalten wird.

9. Das Verfahren nach Anspruch 7 oder 8, wobei:
   die dritte Produktionsvorrichtung ferner einen Kühlabschnitt beinhaltet.

10. Das Verfahren nach einem der Ansprüche 7 bis 9, wobei:
    die dritte Produktionsvorrichtung ferner einen Transportabschnitt beinhaltet.

11. Das Verfahren nach einem der Ansprüche 7 bis 10, wobei:
    die Düse ein Loch mit einem Lochdurchmesser von 0,1 mm bis 2,0 mm aufweist.

12. Das Verfahren nach einem der Ansprüche 7 bis 11, wobei:

    eine Schmelzflussrate des polypropylenbasierten Harzes mit verzweigter Struktur bei 230°C 0,5 g/10 Minuten bis 20,0 g/10 Minuten beträgt; und
    eine Schmelzspannung des polypropylenbasierten Harzes mit verzweigter Struktur bei 200°C nicht weniger als 8,0 cN beträgt.

13. Das Verfahren nach einem der Ansprüche 7 bis 12, wobei:
    das Treibmittel nur aus einem Kohlensäuregas besteht.

14. Ein Verfahren zur Herstellung eines geschäumten Formprodukts aus einem polypropylenbasierten Harz, wobei das Verfahren umfasst:
    einen Erwärmungsschritt des Füllens eines Formhohlraums, der durch mindestens zwei in einer Form enthaltene Formteile gebildet ist, mit extrudierten expandierten polypropylenbasierten Harzpartikeln, die durch ein in einem der Ansprüche 7 bis 13 beschriebenes Verfahren erhalten wurden, und des anschließenden Erwärmens der extrudierten expandierten polypropylenbasierten Harzpartikel im Formhohlraum.

15. Das Verfahren nach Anspruch 14, wobei:

    der Erwärmungsschritt einen Schritt des Erwärmens der extrudierten expandierten polypropylenbasierten Harzpartikel mit Dampf beinhaltet; und
    ein Formgebungsbereich in dem Erwärmungsschritt nicht weniger als 0,03 MPa beträgt.

## Revendications

1. Méthode de production d'une résine à base de polypropylène à structure ramifiée,

   ladite méthode étant réalisée en utilisant un premier dispositif de production comprenant une matrice et une première section de fusion et malaxage qui possède une vis,
   ladite méthode comprenant :

une première étape de fusion et malaxage consistant à faire fondre et à malaxer une résine à base de polypropylène, un composé de diène conjugué, et un initiateur de polymérisation radicalaire dans la première section de fusion et malaxage ; et

une étape de déchargement consistant à décharger, à travers la matrice, une résine à base de polypropylène à structure ramifiée obtenue lors de la première étape de fusion et malaxage,

une quantité du composé de diène conjugué utilisé étant de 0,30 partie en poids à 1,50 partie en poids, par rapport à 100 parties en poids de la résine à base de polypropylène,

une quantité de l'initiateur de polymérisation radicalaire utilisé étant de 0,50 partie en poids à 2,00 parties en poids, par rapport à 100 parties en poids de la résine à base de polypropylène, et

une énergie spécifique $E_1$ qui n'est pas inférieure à 0,35 kWh/kg,

où l'énergie spécifique $E_1$ est une valeur obtenue en divisant la puissance électrique $P_1$ qui est nécessaire pour entraîner la vis de la première section de fusion et malaxage par un taux de décharge $Q_1$ de la résine à base de polypropylène à structure ramifiée.

2. Méthode selon la revendication 1, dans laquelle :
la première section de fusion et malaxage est une extrudeuse multi-vis.

3. Méthode selon la revendication 1 ou 2, dans laquelle :
le composé de diène conjugué se compose seulement d'isoprène et/ou de butadiène.

4. Méthode selon l'une quelconque des revendications 1 à 3, dans laquelle :
l'initiateur de polymérisation radicalaire se compose seulement d'au moins un type choisi dans le groupe consistant en peroxycétals, peroxyesters, et peroxycarbonates.

5. Méthode selon l'une quelconque des revendications 1 à 4, dans laquelle :
un indice d'écoulement à l'état fondu de la résine à base de polypropylène à 230°C est de 0,5 g/10 minutes à 20,0 g/10 minutes.

6. Méthode de production de particules expansées extrudées de résine à base de polypropylène, ladite méthode comprenant :

une première étape de fusion et malaxage (a) d'une résine à base de polypropylène à structure ramifiée qui a été obtenue par une méthode indiquée selon l'une quelconque des revendications 1 à 5 et (b) d'un agent de gonflement dans un deuxième dispositif de production ; et

une deuxième étape de déchargement, à travers une matrice, d'une composition obtenue lors de la première étape sur une région ayant une pression inférieure à une pression interne du deuxième dispositif de production.

7. Méthode de production de particules expansées extrudées de résine à base de polypropylène,

ladite méthode étant réalisée en utilisant un troisième dispositif de production comprenant une deuxième section de fusion et de malaxage qui a une pluralité de vis et une section de granulation qui possède une matrice, ladite méthode comprenant :

une deuxième étape de fusion et de malaxage consistant à faire fondre et malaxer, dans la deuxième section de fusion et malaxage, un agent de gonflement et une résine à base de polypropylène à structure ramifiée qui a été obtenue par une méthode indiquée selon l'une quelconque des revendications 1 à 5 ; et

une étape d'expansion - extrusion consistant à décharger, à travers la matrice, une composition obtenue lors de la deuxième étape de fusion et malaxage sur une région ayant une pression inférieure à une pression interne du troisième dispositif de production,

une énergie spécifique $E_2$ qui n'est pas supérieure à 0,190 kWh/kg,

où l'énergie spécifique $E_2$ est une valeur obtenue en divisant la puissance électrique $P_2$ qui est nécessaire pour entraîner la pluralité de vis de la deuxième section de fusion et malaxage par un taux de décharge $Q_2$ de la composition.

8. Méthode de production de particules expansées extrudées de résine à base de polypropylène,

ladite méthode étant réalisée en utilisant un troisième dispositif de production comprenant une deuxième section de fusion et de malaxage qui a une pluralité de vis et une section de granulation qui possède une matrice,

ladite méthode comprenant :

une deuxième étape de fusion et de malaxage consistant à faire fondre et malaxer, dans la deuxième section de fusion et malaxage, un agent de gonflement et une résine à base de polypropylène à structure ramifiée ; et une étape d'expansion - extrusion consistant à décharger, à travers la matrice, une composition obtenue lors de la deuxième étape de fusion et malaxage sur une région ayant une pression inférieure à une pression interne du troisième dispositif de production,
une énergie spécifique $E_2$ qui n'est pas supérieure à 0,190 kWh/kg,
où l'énergie spécifique $E_2$ est une valeur obtenue en divisant la puissance électrique $P_2$ qui est nécessaire pour entraîner la pluralité de vis de la deuxième section de fusion et malaxage par un taux de décharge $Q_2$ de la composition.

9. Méthode selon la revendication 7 ou 8, dans laquelle :
le troisième dispositif de production comprend en outre une section de refroidissement.

10. Méthode selon l'une quelconque des revendications 7 à 9, dans laquelle :
le troisième dispositif de production comprend en outre une section de transport.

11. Méthode selon l'une quelconque des revendications 7 à 10, dans laquelle :
la matrice a un trou qui a un diamètre de trou de 0,1 mm à 2,0 mm.

12. Méthode selon l'une quelconque des revendications 7 à 11, dans laquelle :

un indice d'écoulement à l'état fondu de la résine à base de polypropylène à structure ramifiée à 230°C est de 0,5 g/10 minutes à 20,0 g/10 minutes ; et
une tension à l'état fondu de la résine à base de polypropylène à structure ramifiée à 200°C n'est pas inférieure à 8,0 cN.

13. Méthode selon l'une quelconque des revendications 7 à 12, dans laquelle :
l'agent de gonflement se compose seulement d'un acide carbonique gazeux.

14. Méthode de production d'un produit moulé en mousse de résine à base de polypropylène, ladite méthode comprenant :
une étape de chauffage consistant à remplir un espace de moulage qui est formé par au moins deux moules inclus dans un moule, avec des particules expansées extrudées de résine à base de polypropylène qui ont été obtenues par une méthode indiquée selon l'une quelconque des revendications 7 à 13, et puis à chauffer les particules expansées extrudées de résine à base de polypropylène dans l'espace de moulage.

15. Méthode selon la revendication 14, dans laquelle :

l'étape de chauffage comprend une étape de chauffage des particules expansées extrudées de résine à base de polypropylène avec de la vapeur ; et
une plage de moulage lors de l'étape de chauffage n'est pas inférieure à 0,03 MPa.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011153170 A
- WO 2018016399 A
- KR 20100073745 A
- JP H09111034 A
- JP 2002012717 A
- US 2018334559 A1
- JP 2002542360 W
- WO 2020004429 A
- JP 10237212 A